# EUROPÄISCHE PATENTSCHRIFT

(11) **EP 2 152 957 B1**
(45) Veröffentlichungstag und Bekanntmachung des Hinweises auf die Patenterteilung: **22.09.2010**
(21) Anmeldenummer: 08749231.0
(22) Anmeldetag: 29.04.2008
(51) Int. Cl.: D06M 13/395, D06M 15/564, D06M 15/568, D06M 15/572, D06M 15/643, C08G 77/388, C08L 83/04

(54) **FLUORKOHLENSTOFFPOLYMER-FREIE ZUBEREITUNGEN AUF BASIS VON WASSER UND/ODER ORGANISCHEN LÖSEMITTELN UND DEREN ANWENDUNG ALS APPRETUR AUF FLÄCHENGEBILDEN**
FLUOROCARBON POLYMER-FREE PREPARATIONS BASED ON WATER AND/OR ORGANIC SOLVENTS AND THE USE THEREOF AS A FINISH ON FLEXIBLE SHEET MATERIAL
PRÉPARATIONS À BASE D'EAU ET/OU DE SOLVANTS ORGANIQUES EXEMPTES DE POLYMÈRE DE FLUOROCARBONE ET LEUR UTILISATION EN TANT QUE FINI SUR DES STRUCTURES PLATES

(30) Priorität: 03.05.2007 DE 102007020790
(43) Veröffentlichungstag der Anmeldung: 17.02.2010
(73) Patentinhaber: Rudolf GmbH & Co. KG Chemische Fabrik, 82538 Geretsried (DE)
(72) Erfinder: DUSCHEK, Gunther, 83671 Benediktbeuren (DE); SIELEMANN, Dirk, 82515 Wolfratshausen (DE)
(74) Vertreter: Zumstein, Angela
(86) Internationale Anmeldenummer: PCT/EP2008/003478
(87) Internationale Veröffentlichungsnummer: WO 2008/135208

(56) Entgegenhaltungen:
- WO-A-03/078725
- WO-A-03/085015

## Beschreibung

Die Erfindung betrifft Zubereitungen auf Basis von Wasser und/oder organischen Lösemitteln und deren Anwendung als Appretur auf Flächengebilden.

Es ist bekannt, dass zum Appretieren von Flächengebilden Zubereitungen auf wässriger Basis oder Lösemittelbasis aus Silikonölen, Paraffinen, Fluorcarbonpolymeren (Fluorcarbon wird im folgenden mit FC abgekürzt) und anderen Additiven verwendet werden, welche dem appretierten Flächengebilde besondere hydrophobe Effekte verleihen, um den Beanspruchungen gegenüber Regen, Spritzwasser oder Feuchtigkeit aus anderen Quellen während des Gebrauchs des Flächengebildes gerecht zu werden.

Während die Erzeugung von wasserabweisenden Effekten mit Produkten auf Basis von Paraffinen und Siliconen lediglich eine Hydrophobierung der Textilfaser bewirkt, führen Fluorcarbonpolymere zusätzlich zu einer Schmutz- und Ölabweisung. Fluorcarbonausrüstungen kommen für eine große Anzahl von Artikeln in Frage. Sie werden sowohl im Bekleidungs- und Heimtextilienbereich, als auch im Sektor der technischen Textilien eingesetzt.
Üblicherweise basieren Produkte für die Fluorcarbonausrüstung auf Polyurethanen oder Polyacrylaten, welche Perfluoralkylgruppen unterschiedlicher Kettenlänge enthalten. Die Applikation der bevorzugt wässrigen Produkte erfolgt meist über das Auszieh- und Foulardverfahren durch Sprühen, Schäumen oder Pflatschen, häufig in Kombination mit anderen Additiven. Dies können z.B. wärmehärtende Harze auf Basis von Methylolverbindungen sein, die Formbeständigkeit, Waschechtheit und Steife bewirken. Desweiteren werden auch Stoffe eingesetzt, die als Extender bezeichnet werden. Üblicherweise handelt es sich dabei um fettsäuremodifizierte Melaminharze, Gemische aus Wachs und Zirkoniumsalzen oder blockierte Polyisocyanate. Letztere werden häufig eingesetzt, um die wasser- und ölabweisenden Effekte der Fluorcarbonausrüstung zu verbessern und die Waschpermanenz zu erhöhen.
Trotz des insgesamt guten Gesamteffektniveaus der FC-Polymere ist zu erwähnen, dass nach Waschprozessen sowohl Hydrophob- als auch Oleophobwirkung aufgrund der Desorientierung der aktiven FC-Reste an den Polymermolekülen stark reduziert wird, sofern nicht durch thermische Behandlung eine Reorientierung stattfinden kann. Dies bedeutet, dass solcherart behandelte Flächengebilde nach einer Wäsche einer Hitzebehandlung bedürfen, um die gewünschten Effekte zu revitalisieren. So ist beispielsweise ein Bügeln oder mindestens ein Trocknen im Tumbler bei Temperaturen >80°C Voraussetzung für gute Phobiereigenschaften.

Häufig werden auch Organopolysiloxane in Kombination mit FC-Polymeren eingesetzt. So beschreibt EP 0173231 A2 Organopolysiloxane mit Si-gebundenem Wasserstoff und Si-C gebundenen Epoxygruppen, Verfahren zu ihrer Herstellung und die Verwendung dieser Organopolysiloxane zusammen mit FC-Polymeren zur Hydro- und Oleophobierung von Fasern. In der DE 10139126 A1 werden ähnliche Zusammensetzungen bestehend aus Polysiloxan, Fluorpolymeren und Extendern beschrieben.

Desweiteren sind aus JP 599271 auch Produkte bekannt, bei denen reaktive Umsetzungsprodukte von Fettsäureamiden mit Polyisocyanaten in Kombination mit FC-Polymeren eingesetzt werden.

Nachteilig ist bei den Zubereitungen auf FC-Polymerbasis der relativ hohe Preis, welcher durch zahlreiche, teilweise energieaufwändige Synthesestufen bedingt ist. Aufgrund neuester Untersuchungen können zudem in geringen Konzentrationen Nebenprodukte enthalten sein, deren ökotoxikologische Eigenschaften noch nicht ausreichend untersucht sind, so dass eine negative Sensibilisierung der Öffentlichkeit gegenüber der gesamten Gruppe der FC-Polymeren nicht auszuschließen ist.

Neben FC-haltigen Systemen gibt es FC-freie Produkte mit denen sich hydrophobe jedoch keine oleophobe Effekte erzielen lassen. Wässrigen Emulsionen aus Paraffinen, Metallseifen sowie Kieselsäuresalzen polyvalenter Metalle werden eingesetzt, um die textile Oberfläche undurchlässig gegenüber Regen oder Spritzwasser zu machen. Derartige Zubereitungen werden auch zur Behandlung von Papier eingesetzt, um die hydrophoben Eigenschaften zu verbessern. Aus der deutschen Auslegeschrift DE-AS 1001965 ist bekannt, Reaktionsprodukte aus basischen Metallsalzen von höhermolekularen Fettsäuren oder Harzsäuren und niedrigmolekularen Di- oder Polyisocyanaten zum Trockenhydrophobieren von Textilien zu verwenden.

Neben einer guten Anfangshydrophobie ist auch die Beständigkeit der Appretur gegenüber mehrfachen Wäschen ein wichtiger Punkt. Es wurden deshalb schon frühzeitig Zubereitungen entwickelt, welche die ungenügende Beständigkeit gegenüber Waschprozessen verbessern sollten. So werden in der DE-B 1 017 133 Hydrophobiermittel beschrieben, welche durch Mischung eines Kondensationsproduktes aus Hexamethylolmelaminhexamethylether, Stearinsäure, Stearinsäurediglycerid und Triethanolamin mit Paraffin herzustellen sind. Die so erhaltenen schuppen- oder brockenartigen Produkte werden vor der Anwendung durch Aufschmelzen mit heißem Wasser oder Dampf und unter Zusatz von Essigsäure in eine aus wässrigen Flotten heraus applizierfähige Emulsionsform gebracht.
Bei den damit ausgerüsteten Flächengebilden und Fasermaterialien hat sich allerdings als nachteilig herausgestellt, dass durch die relativ hohe Aufbringungsmenge, den chemischen Charakter der Zubereitung und insbesondere durch die Vernetzung der fettsäuremodifizierten Methyloltriazinverbindung mit sich selbst sowie den funktionellen Gruppen von Substraten auf nativer Basis eine deutliche Verhärtung des Griffcharakters einherging.

Verfahren zur Imprägnierung von Textilien durch Auftragen von vernetzbaren Organopolysiloxanen sind bereits seit längerem bekannt. Die Vernetzung kann durch Kondensation von Si-H-und Si-OH-funktionellen Organopolysiloxane mit Hilfe eines Katalysators wie z.B. in US 4098701 beschrieben erfolgen. Ebenso ist eine Vernetzung durch eine Anlagerung von Si-H-funktionellen Organopolysiloxanen an SiC-gebundene olefinische Reste möglich (vgl. z.B. US 4154714 und DE 3332997 A1). Aufgrund des reaktiven Charakters der Organopolysiloxane ist die Herstellung lagerstabiler Zubereitungen schwierig. Häufig können die Komponenten erst direkt vor der Verwendung gemischt werden, was die Handhabung in der Praxis umständlich macht.

WO 00/29663 A2 beschreibt Zubereitungen für die permanente Faserausrüstung, die Umsetzungsprodukte von polyisocyanatfunktionellen Verbindungen mit silikonfreien und/oder silikonhaltigen Weichgriffmitteln enthalten und ausweislich der Beispiele bevorzugt einen hydrophilierenden Rest aufweisen.

In JP 041011081 A wird ein Behandlungsmittel zur Verbesserung der Wasserabsorption von Textilien beschrieben. Dieses Behandlungsmittel wird hergestellt aus einem aminofunktionellen Organopolysiloxan, einem hydrophilen Polyetherisocyanat und einem epoxyfunkionellen Organopolysiloxan.

In DE 2038705 B wird ein Verfahren zur Herstellung von Fasergebilden mit elastischem Griff beschrieben durch Behandlung mit Organopolysiloxan und Polyisocyanat enthaltenden Lösungen und anschliessendem Erhitzen.

DE 19744612 A1 beschreibt Emulsionen von Organosiliciumverbindungen für die Hydrophobierung von mineralischen und Baustoffen und Baubeschichtungen und Holz. Die wässrigen Emulsionen enthalten mit langkettigen Kohlenwasserstoffketten modifizierte Alkoxysilane. Eine Anwendung auf Textilien wird jedoch nicht erwähnt.

Desweiteren sind aus DE 10211549 B9 Zubereitungen bekannt, die aus einer synthetischen oder natürlichen Wachskomponente, einem hochverzweigtem Polyurethan und gegebenenfalls einem blockiertem Polyisocyanat bestehen. Bei den Wachsen kann es sich z.B. um Bienenwachs, Carnaubawachs, Polyethylenwachs oder Fischer-Tropsch-Wachs handeln. Besonders bevorzugt sind jedoch lineare Paraffinwachse.

Mit diesen Systemen lassen sich sehr gute wasserabweisende Effekte erzielen, jedoch sind relativ hohe Einsatzmengen erforderlich. Dies führt dazu, dass die Atmungsaktivität des ausgerüsteten Textils verringert wird. Nach Wäschen muss, ähnlich wie bei den mit den mit FC-haltigen Zubereitungen behandelten Textilien eine thermische Behandlung, z.B. im Wäschetrockner, oder durch Bügeln, erfolgen um das ursprüngliche Effektniveau wieder zu erhalten.

Es war daher Aufgabe der vorliegenden Erfindung, eine Zubereitung herzustellen, welche auf Flächengebilden mit geringen Einsatzmengen optimale hydrophobe Effekte erzielt ohne die Atmungsaktivität des ausgerüsteten Textils zu verringern. Desweiteren sollte die Zubereitung kommerzielle und ökologische Vorteile gegenüber der den Stand der Technik darstellenden Ausrüstung mit FC-Polymeren bieten. Zusätzlich sollten die mit der Zubereitung ausgerüsteten Textilien auch nach Wäschen ein hohes Effektniveau ohne eine thermische Behandlung aufweisen.

Überraschenderweise konnte die Aufgabe durch die Verwendung einer Zubereitung gelöst werden, welche ein hydrophobes Umsetzungsprodukt (S) (Komponente (1)), ein C₈-C₂₈-Alkylgruppen enthaltendes Organopolysiloxan (Komponente (2)), gegebenenfalls ein mit einer Schutzgruppe blockiertes Polyisocyanat (Komponente (3)) sowie bei wässrigen Zubereitungen die zur Emulgierung essentiellen Emulgatoren (Komponente (4)) enthalten. Die so erhaltenen Zubereitungen zeichnen sich durch überlegene Hydrophobiereigenschaften bei geringen Einsatzmengen aus, wobei die Atmungsaktivität des damit ausgerüsteten Textils erhalten bleibt. Desweiteren ist das Effektniveau auch nach Wäschen ohne thermische Behandlung sehr gut.

Der erste Gegenstand der Erfindung sind Fluorkohlenstoffpolymer-freie Zubereitungen (Z) auf Basis von Wasser und/oder organischen Lösemitteln, gekennzeichnet durch den Gehalt folgender Einzelkomponenten:
(1) 10 - 90 % eines hydrophoben Umsetzungsproduktes (S), erhältlich durch Umsetzen einer Komponente (A) der 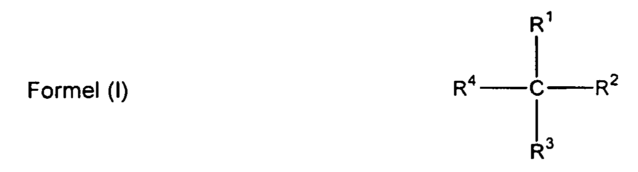 und/oder der 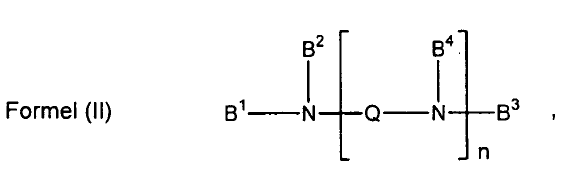 wobei R¹ ein hydrophober Rest der Bedeutung -X-Y-Z oder -Z ist, in welchem 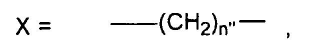 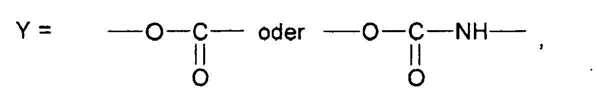 Z = -(CH₂)ₘCH₃ bedeuten,
R² ein Rest der Zusammensetzung 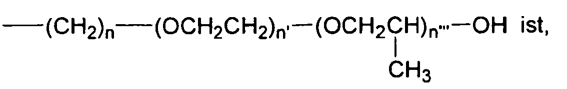 R³ ein hydrophober Rest der Bedeutung -X-Y-Z, -Z oder -Y-Z ist, mit der Maßgabe, dass im Falle der Bedeutung -Y-Z dann im Rest R² n immer durch n" ersetzt ist,
R⁴ ein Rest der Bedeutung -X-Y-Z oder -(CH₂)_{n'}H ist,
B¹ ein hydrophober Rest der Bedeutung -V-W-Z oder -Z ist, in welchem 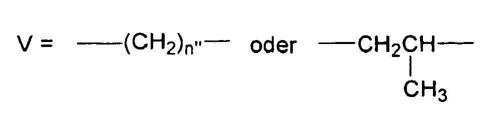 ist, 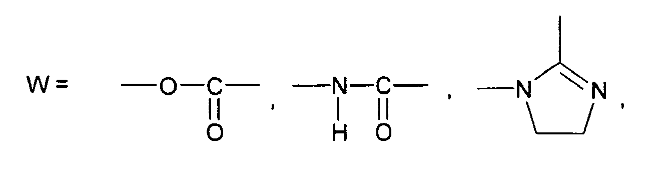 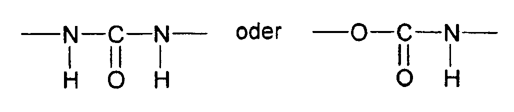 ist, 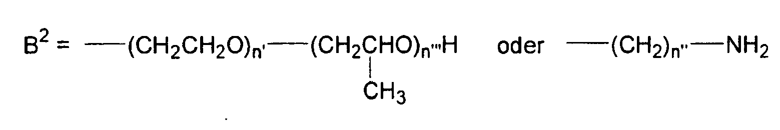 ist,
B³ = ein hydrophober Rest der Bedeutung -V-W-Z, -Z oder 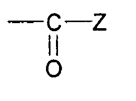 ist,
B⁴ = -V-W-Z oder 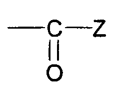 ist und
Q = die Bedeutung -(CH₂)_{n"}- hat,

| | | |
|---|---|---|
| n, n', n", n"' und m unabhängig voneinander ganze Zahlen der Bedeutung | | |
| n | = | 0 - 2, |
| n' | = | 0 - 4, |
| n" | = | 1 - 4, |
| n"' | = | 0 - 4 und, |
| m | = | 12 - 26, bevorzugt 14 - 22 sind, |

mit einem nicht blockierten oder teilblockierten Di-, Tri- oder Polyisocyanat (IC), wobei der Anteil an freien NCO-gruppen zwischen 1,8 und 10 pro Mol liegt und das Verhältnis der freien NCO-Gruppen zu den reaktionsfähigen Gruppen der Verbindungen der Formeln (I) und/oder (II) 1 : 1 bis 1 : 1,3 ist,
(2) 10 - 90 % eines C₈-C₂₈-Alkylgruppen enthaltenden Organopolysiloxanes, das aus Strukureinheiten der Formeln (IIIa, IIIb, IIIc, IV), 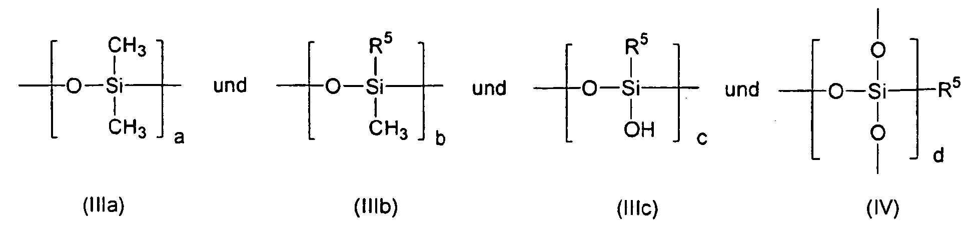 und Endgruppen der Formeln (Va, Vb, Vc) 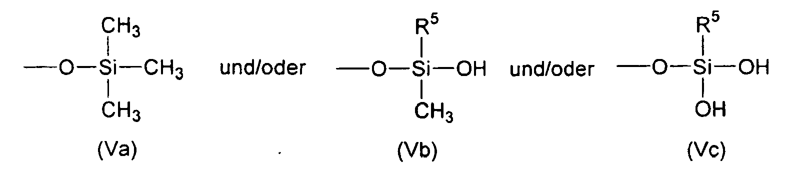 aufgebaut ist,
wobei R⁵ in den Formeln (IIIb), (IIIc), (IV), (Vb) und (Vc) unabhängig voneinander für einen linearen oder verzweigten C₈-C₂₈-Alkylrest, bevorzugt für einen linearen oder verzweigten C₁₄-C₂₀-Alkylrest und besonders bevorzugt für einen linearen C₁₆-C₁₈-Alkylrest,
oder für einen Rest der Bedeutung

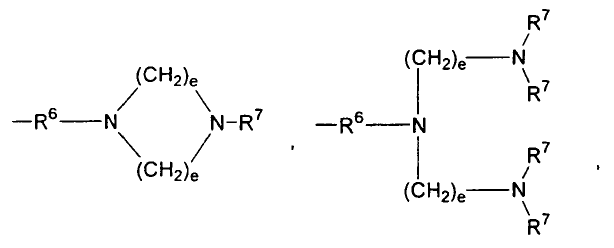

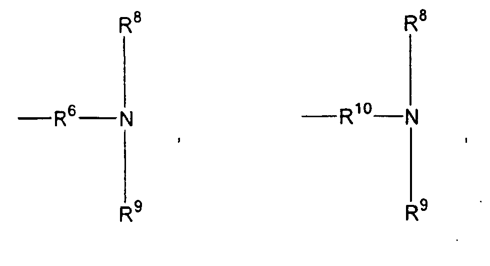

-(CH₂)_{f}-NH-(CH₂)_{g}-NH₂ , -(CH₂)_{g}-NH₂

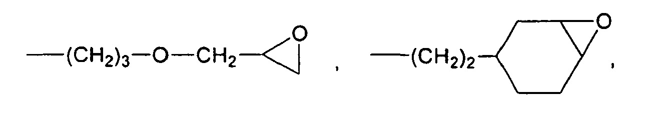

oder 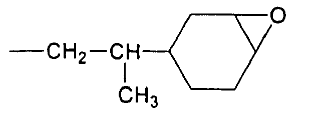 steht,
wobei R⁶ ein Rest der Bedeutung 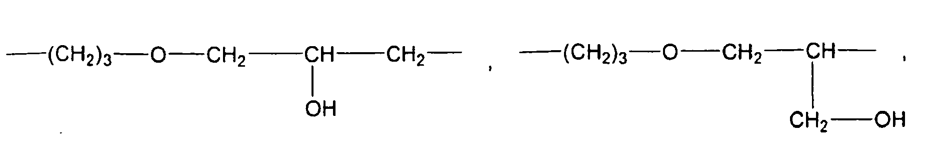 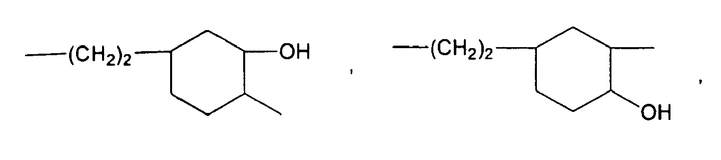 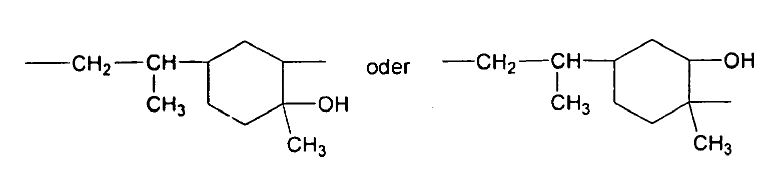 ist,
R⁷ ein linearer oder verzweigter C₁-C₄-Alkylrest ,
R⁸ und R⁹ gleiche oder verschiedene, lineare oder verzweigte C₁-C₁₈-Alkylreste, bevorzugt lineare C₈-C₁₈-Alkylreste und besonders bevorzugt lineare C₁₄- C₁₈-Alkylreste sind,
R¹⁰ ein Rest der Bedeutung 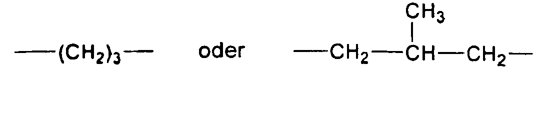 ist
a = eine ganze Zahl von 0 - 700, bevorzugt 0 - 350 und besonders bevorzugt 0 - 175,
b = eine ganze Zahl von 0 - 900, bevorzugt 0 - 450 und besonders bevorzugt 0 - 225,
c = eine ganze Zahl von 0 - 200, bevorzugt 0 - 100 und besonders bevorzugt 0 - 50,
d = eine ganze Zahl von 0 - 100 ist, bevorzugt 0 - 50 und besonders bevorzugt 0 - 25 ist,
   wobei a + b + c + d = 10 - 1000, bevorzugt 20 - 750 und besonders bevorzugt 30 - 500 ist,
   und b+c ≥ 10, bevorzugt ≥ 20 und besonders bevorzugt ≥ 30 ist
e = die ganze Zahl 2 oder 3,
f = die ganze Zahl 2 oder 3,
g = die ganze Zahl 2 oder 3
   ist,
   mit der Maßgabe, dass der Gesamtstickstoffgehalt des Organopolysiloxanes 0,15 - 1,00, bevorzugt 0,20 - 0,80 und besonders bevorzugt 0,25 - 0,50 Gewichtsprozent beträgt, das Epoxidequivalent des Organopolysiloxanes 1000 - 25000 g/eq., bevorzugt 2000 -15000 g/eq. und besonders bevorzugt 5000 - 12000 g/eq. beträgt und der Gehalt an C₈-C₂₈-Alkylresten im Organopolysiloxan 25 - 86 bevorzugt, 40 - 80 und besonders bevorzugt 50 -75 Gewichtsprozent beträgt.

(3) 0 - 45 % eines nicht blockierten oder blockierten Di-, Tri- oder Polyisocyanates und
(4) gegebenenfalls übliche Emulgatoren.

Sämtliche Prozentangaben der erfindungsgemäßen Zubereitungen beziehen sich auf die Gesamtzusammensetzung der Wirksubstanzen der erfindungsgemäßen Zubereitung und sind Gewichtsprozente. Als bevorzugte Bereiche sind für die Komponente (1) ein Bereich von 20 - 80 %, besonders bevorzugt von 25 - 65 %, für die Komponente (2) 20 - 80 %, insbesondere jedoch 30 - 70 % zu nennen. Sofern die Komponente (3) zugesetzt wird, liegt deren Konzentration bevorzugt im Bereich von 1 - 40 %, insbesondere von 5 - 35 %. Die bevorzugte Konzentration der Komponente (4) liegt im Bereich von 4 - 25 %, besonders bevorzugt im Bereich von 7 - 15 %, bezogen auf die Summe der Wirksubstanz der verwendeten Komponenten (1), (2) und (3).

Die Komponente (1) besteht aus einem hydrophoben Umsetzungsprodukt (S), welches erhältlich ist durch Umsetzen einer anspruchsgemäßen Komponente (A) mit einem anspruchsgemäßen Di-, Tri- oder Polyisocyanat (IC). Die in dieser Komponente (1) als Komponente (A) eingesetzten Verbindungen der Formel (I) bestehen aus Umsetzungsprodukten von mehrwertigen Alkoholen (a1) mit Carbonsäuren (b1) oder mit Alkylisocyanaten (b2). Bevorzugte Beispiele für mehrwertige Alkohole (a1) sind Glyzerin, Trimethylolethan, Trimethylolpropan, 1,2,4-Butantriol, Pentaerythrit oder Zucker, wie zum Beispiel Glucose. Dabei sind Glyzerin, Trimethylolethan, Trimethylolpropan, 1,2,4-Butantriol und Pentaerythrit besonders bevorzugt.

Die in der Komponente (1) als Komponente (A) eingesetzten Verbindungen der Formel (II) bestehen aus Umsetzungsprodukten von Alkanolaminen (a2) und/oder Alkylaminen (a3) mit Carbonsäuren (b1) oder mit Alkylisocyanaten (b2). Beispiele für Alkanolamine (a2) sind 2-Amino-2,3-propandiol, 2-Amino-2-methyl-1,3-propandiol, Diethanolamin, Dipropanolamin, Diisopropanolamin, Ethanolpropanolamin, Triethanolamin, Triisopropanolamin, N,N,N',N'-Tetrakis(2-hydroxypropyl)ethylendiamin, Aminoethylethanolamin, Aminopropylethanolamin, Alkyltris(hydroxyethyl)propylendiamin und Alkyldihydroxyethylamin mit bevorzugt 12 - 24 Kohlenstoffatomen im Alkylrest, sowie deren Ethoxylierungsprodukte. Dabei sind Diethanolamin, Diisopropanolamin, Triethanolamin, Triisopropanolamin, Aminoethylethanolamin und Aminopropylethanolamin besonders bevorzugt.

Beispiele für Alkylamine (a3) sind Bis(aminoethyl)amin, Bis(aminopropyl)amin und deren polymere Homologe, Aminoethylaminopropylamin, Bis(aminopropyl)ethylendiamin, Tris(aminoethyl)amin, Tris(aminopropyl)amin, Trisaminononan, Aminopropylstearylamin und Aminopropylbisstearylamin. Dabei sind Bis(aminoethyl)amin, Bis(aminopropyl)amin, Aminoethylaminopropylamin, Bis(aminopropyl)ethylendiamin und Aminopropylstearylamin besonders bevorzugt.

Anstelle der unter Verwendung der mehrwertigen Alkohole (a1) oder der Alkanolamine (a2) oder der Alkylamine (a3) sowie der Carbonsäuren (b1) oder der Alkylisocyanate (b2) hergestellten Komponente (A) können zur Umsetzung mit den nicht blockierten oder teilblockierten Di-, Tri- oder Polyisocyanaten (IC) auch Komponenten mit einem aktiven Wasserstoffatom und zwei hydrophoben Resten, wie beispielsweise Guerbet-Alkohole, Bis(dodecyl)amin und bevorzugt Bis(octadecyl)amin eingesetzt werden.

Weiterhin sind bei der genannten Herstellung der Komponente (A) auch Mischungen der genannten Alkohole (a1) mit den Alkanolaminen (a2) und mit den Alkylaminen (a3) einsetzbar.

Die zur Herstellung der Komponente (A) der Formel (I) und (II) verwendeten Carbonsäuren (b1) können gesättigt, linear oder verzweigtkettig mit 9 - 31 Kohlenstoffatomen, bevorzugt mit 11 - 23 Kohlenstoffatomen im Alkylrest sein. Beispiele für die in Formel (I) und (II) verwendeten gesättigten, linearen Carbonsäuren sind Caprin-, Undecan-, Laurin-, Myristin-, Palmitin-, Stearin-, Arachin- und Behensäure. Dabei sind Laurin-, Palmitin-, Stearin- und Behensäure besonders bevorzugt.

Die zur Herstellung der Komponente (A) der Formel (I) und (II) verwendeten Alkylisocyanate (b2) sind bevorzugt linear mit 9 - 31, insbesondere mit 12 - 22 Kohlenstoffatomen im Alkylrest, wie beispielsweise Stearylisocyanat.

Für die Umsetzung mit dem nicht blockierten oder teilblockierten Di-, Tri- oder Polyisocyanat (IC) können auch Mischungen beider Verbindungen der Formeln (I) und (II) Verwendung finden.

Sofern Verbindungen der Formeln (I) und (II) kommerziell verfügbar sind, können sie für die genannte Umsetzung direkt eingesetzt werden; eine eigene Herstellung ist daher nicht erforderlich.

Die vorstehend erläuterte Komponente (A) wird mit den anspruchsgemäßen Di-, Tri- oder Polyisocyanaten (IC) zum Produkt (S) umgesetzt. Beispiele für dabei eingesetzte, nicht blockierte oder in teilblockierte Isocyanate zu überführende Di-, Tri- oder Polyisocyanate (IC) werden in der DE-A-100 17 651, Seite 3, Absatz 0032 bis einschließlich 0037 beschrieben.

Besonders bevorzugte Di-, Tri- oder Polyisocyanate (IC) sind beispielsweise 2,4-Toluylendiisocyanat, 2,4'-Diphenylmethandiisocyanat, 4-Methyl-cyclohexan-1,3-diisocyanat, 4,4'-Diphenylmethandiisocyanat, die Mischungen aus monomeren Diphenylmethandiisocyanaten und höherkettigen Homologen des Diphenylmethandiisocyanates (Polymer-MDI), Tetramethylendiisocyanat, Tetramethylendiisocyanat-Trimere, Hexamethylendiisocyanat, Hexamethylendiisocyanat-Trimere, Isophorondiisocyanat, Isophorondiisocyanat-Trimere, 2,2,4-oder 2,4,4-Trimethyl-1,6-hexamethylendiisocyanat und Dimerdiisocyanat. Dimerdiisocyanat ist erhältlich von der Firma Cognis Corp., 300 Brookside Avenue, Ambler, PA 19002, USA, unter der Bezeichnung DDI 1410.

Die Herstellung cyclisierter Oligo- oder Polyisocyanate kann nach den bekannten Methoden der Cyclisierung gemäß W. Siefken (Liebigs Annalen der Chemie 562, Jahrgang 1949, Seiten 75 - 136) erfolgen, wobei die Oligo- oder Polyisocyanate offenkettig oder cyclisch vorliegen können. Derartige Verbindungen können aus den genannten Di-, Tri- und Polyisocyanaten durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminoxadiazindion-Strukturen hergestellt werden. Bevorzugt werden Hexamethylendiisocyanat-Trimere, Diphenylmethandiisocyanat-Trimere und Urethane aus 2,4-Toluylendiisocyanat verwendet, welche noch über freie NCO-Gruppen verfügen.

Es ist auch möglich, Teilmengen der Isocyanatgruppen mit Polyalkoxymonoalkylethern unter Zuhilfenahme entsprechender Katalysatorsysteme zu Urethanen umzusetzen, um die Emulgierbarkeit der Komponente (1) in Wasser zu verbessern. Es können hierbei Polyethylenglykolmonomethylether mit 4 - 20 Ethylenoxideinheiten, optional mit zusätzlichen 2 - 6 Propylenoxydeinheiten Verwendung finden. Als Katalysatoren können die dem Fachmann bekannten Systeme auf Basis tertiärer Amine und/oder zinnorganischen Verbindungen, wie beispielsweise Dibutylzinndilaurat, Dioctylzinndilaurat oder -diacetat verwendet werden. Alternativ zu den mittels Polyalkoxymonoalkylethern modifizierten Isocyanaten können tertiäre Alkanolamine als Zusatzstoffe Verwendung finden, um die kationische Ladung der Umsetzungsprodukte (S) und damit die selbstemulgierenden Eigenschaften ohne Beeinträchtigung der Gesamteigenschaften zu verbessern. Bevorzugt geeignet ist hierbei Dimethylaminoethanol.

Sofern für die Umsetzung zur Komponente (1) teilblockierte Di-, Tri- oder Polyisocyanate (IC) Verwendung finden, können diese mit den üblichen und bekannten Blockierungsmitteln teilblockiert sein, wie sie beispielsweise in der DE-A-100 17 651, Absatz 0042 beschrieben sind. Bevorzugt werden Natriumbisulfit oder Methylethylketoxim, insbesondere jedoch 3,5-Dimethylpyrazol für die Teilblockierung verwendet.

Die Teilblockierung erfolgt durch Umsetzung der zu blockierenden Di-, Tri- oder Polyisocyanate (IC) mit dem Blockierungsmittel in der Schmelze oder in einem gegenüber Isocyanaten im wesentlichen inerten organischen Lösemittel (LM), vorzugsweise unter einer Schutzgasatmosphäre und in Gegenwart eines geeigneten Katalysators, wie es beispielsweise in der europäischen Patentschrift EP 0 159 117 B1 oder der deutschen Patentschrift DE 44 41 418 A1 beschrieben wird. Das Verhältnis der freien NCO-Gruppen der zu blockierenden Di-, Tri-oder Polyisocyanate (IC) zu den reaktiven Gruppen des Blockierungsmittels liegt vorzugsweise in einem stöchiometrischen Überschuss bis zu 2 : 1, bevorzugt bis zu 3 : 1.

Als geeignete, inerte organische Lösemittel (LM) werden bevorzugt wasserfreie Ester, wie beispielsweise Ethylacetat, n-Propylacetat, i-Propylacetat, n-Butylacetat, i-Butylacetat oder Amylacetat verwendet.

Bei der Komponente (2) handelt es sich um neue im Stand der Technik noch nicht beschriebene C₈-C₁₈-Alkylgruppen enthaltende Organopolysiloxane. Ein neuer Aspekt im Zusammenhang mit der vorliegenden Erfindung besteht daher in diesen erstmals bereitgestellten Verbindungen. Die Herstellung dieser Komponente erfolgt über Methoden, die dem Fachmann bekannt sind. Dabei sind verschiedene Synthesewege möglich. Bei der ersten Route wird ausgehend von Polymethylwasserstoffsiloxanen der Formel (VI) mit lateralen SiH-Gruppen mit einer Kettenlänge von m = 10 - 1000, wie in EP 0159568 B1 (Beispiel 1) beschrieben, durch Hydrosilylierung mit linearen oder verzweigten α-Olefinen und ungesättigten Glycidylethern, ein epoxy - und alkylmodifiziertes Organopolysiloxan erhalten.

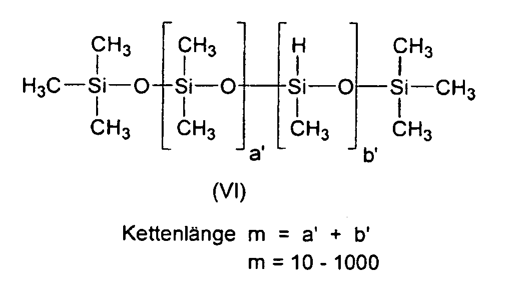

Die Anzahl (b) der Struktureinheit der anspruchsgemäßen Formel (IIIb) im erfindungsgemäßen Organopolysiloxan wird durch die Anzahl (b') an SiH-Gruppen im Polymethylwasserstoffsiloxan bereits in diesem Syntheseschritt bestimmt. Indirekt wird somit auch der Gehalt an Alkylgruppen, Epoxygruppen und Aminogruppen definiert. Die verwendeten Polymethylwasserstoffsiloxane können durch eine mit Trifluormethansulfonsäure katalysierte Equilibrierungsreaktion analog zu US 5578692 (Beispiel 1) hergestellt werden.
Die Hydrosilylierung wird bei Temperaturen von 120° - 190 °C unter Pt-Katalyse durchgeführt, wobei die Reaktion im allgemeinen so durchgeführt wird, dass die ungesättigten Verbindungen vorgelegt werden und das Polymethylwasserstoffsiloxan zugetropft wird, so dass man eine Verbindung der Formel (VII) erhält. 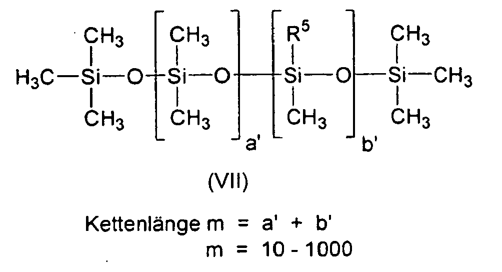 R⁵ = linearer oder verzweigter C₈-C₂₈-Alkylrest, 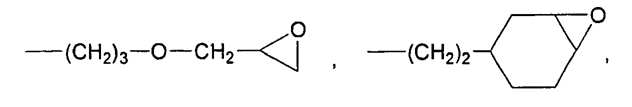 und/oder

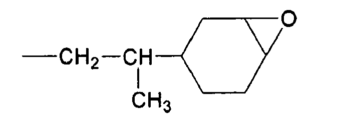

Als Pt-Katalysator wir bevorzugt Hexachloroplatinsäure oder 1,3-Divinyl-1,1,3,3-tetramethyldisiloxan-platin(0) verwendet werden, wobei die Einsatzmenge 5 - 40 ppm Pt bezogen auf den gesamten Reaktionsansatz beträgt.

Bei den verwendeten linearen oder verzweigten α-Olefinen handelt es sich z.B. 2-methyl-1-hepten, 1-Octen, 1-Isoocten, 1-Nonen, 1- Isononen, 1-Decen, 1-Isodecen, 1-Undecen, 1-Isoundecen, 1-Dodecen, 1-Isododecen, 1-Tridecen, 1-Isotridecen, 1-Tetradecen, 1-Isotetradecen, 1-Pentadecen, 1-Isopentadecen, 1-Hexadecen,1-Isohexadecen, 1-Octadecen, 1-Isooctadecen, 1-Nonadecen, 1-Isononadecen, 1-Eicosen, und α-Olefinfraktionen mit C₂₂- C₂₈ eingesetzt. Dabei sind C₁₄-C₂₀ α-Olefine bevorzugt und 1-Octadecen und 1-Hexadecen besonders bevorzugt.

Beispiele für ungesättigte Glycidylether sind Allylglycidylether, (+)- bzw. (-)-Limonenoxid, oder 4-Vinyl-1-cyclohexen-1,2-epoxid, wobei Allylglycidylether besonders bevorzugt ist.

Im nächsten Syntheseschritt können die Epoxidgruppen teilweise mit Aminen, unter Ringöffnung analog zu DE-OS 1493384 (Beispiel 1) zu den erfindungsgemäßen C₈-C₂₈-Alkylgruppen enthaltenden Organopolysiloxan umgesetzt werden. Als Amine werden besonders bevorzugt Bis-[3-(dimethylamino)-propyl]-amin und N-Methypiperazin eingesetzt.

Bei der gesamten Synthesesequenz ist zu beachten, dass das Epoxidequivalent im erfindungsgemäßen Organopolysiloxan 1000 - 25000 g/eq., bevorzugt 2000 -15000 g/eq. und besonders bevorzugt 5000 - 12000 g/eq. beträgt. Desweiteren ist der Gehalt an C₈-C₂₈-Alkylgruppen im Organopolysiloxan 25 - 86, bevorzugt 40 - 80 und besonders bevorzugt 50 - 75 Gewichtsprozent. Der Stickstoffgehalt beträgt 0,15 - 1,00 bevorzugt 0,20 - 0,8 und besonders bevorzugt 0,25 - 0,50. Die einzelnen Gehalte im Organopolysiloxan werden hauptsächlich über drei Faktoren eingestellt:
1. über die Anzahl (b') an SiH-Gruppen im Polymethylwasserstoffsiloxan der Formel (VI),
2. über das Verhältnis von α-Olefin zu ungesättigten Glycidylethern bei der Hydrosilylierung zu Verbindugen der Formel (VII),
3. über die Menge Epoxidgruppen, die mit dem Amin umgesetzt werden.

Eine weitere Route zur Herstellung der erfindungsgemäßen Organopolysiloxane besteht darin im ersten Syntheseschritt ausgehend von einem Polymethylwasserstoffsiloxan mit lateralen SiH-Gruppen mit einer Kettenlänge von 10-1000 Si-Einheiten wie z.B. in US 5493041 (Beispiel 4) ein alkylmodifiziertes Organopolysiloxan herzustellen und dieses anschließend mit Epoxysilanen und mit Aminosilanen basisch katalysiert zu equilibrieren analog zu EP 1136513 B1 (Beispiel 1).

Die Equilibrierungsreaktion wird bevorzugt unter Katalyse mit Tetramethylammonium-, Kalium- oder Natriumhydroxid in Gegenwart von geringen Mengen Wasser durchgeführt, so dass zunächst eine Hydrolyse der Alkoxysilane unter Bildung von freien SiOH-Gruppen stattfindet. Die Wassermenge wird so gewählt, dass ca. 30 Mol% der Alkoxysilangruppen hydrolysieren. Der bei der Hydrolyse entstehende Alkohol wird abdestilliert und die Temperatur dabei langsam auf ca. 110 °C erhöht. Werden Epoxysilan und Aminosilan gleichzeitig eingesetzt ist darauf zu achten, dass diese Temperatur nicht über 110°C steigt, da sonst die Aminoverbindung unter Ringöffnung an die Epoxidgruppe addiert. Dies führt zu stark vernetzten Organopolysiloxanen, die sich schlecht emulgieren lassen. Desweiteren wird die Reaktion so kontrolliert, dass eine gewisse Vernetzung der SiOH-Gruppen über eine Kondensationreaktion unter Abspaltung von Wasser stattfindet. Der Vernetzungsgrad sollte so gesteuert werden, dass die Viskosität des Produktes ein Rühren zulässt. Eventuell kann durch Zusatz eines Lösungsmittels wie z.B. Methanol, Ethanol oder Isopropanol die Homogenität des Reaktionsgemisches verbessert werden. Das Lösungsmittel wird nach der Abschluss Reaktion abdestilliert.

Als Epoxysilan kann z.B. 3-Glycidyloxypropyltrimethoxysilan, 3-Glycidyloxypropyldimethoxymethylsilan, Glycidyloxypropyltriethoxysilan oder 3-Glycidyloxypropyldiethoxymethylsilan eingesetzt werden, während es sich bei dem Aminosilan z.B. um N-(2-Aminoethyl)-3-(aminopropyl)methyl-dimethoxysilan, 3-Aminopropyltrimethoxy-silan, N-(2-Aminoethyl)-N'-[3-(trimethoxysilyl)propyl)-ethylendiamin, N-(2-Aminoethyl)-3-(aminopropyl)methyl-diethoxysilan oder 3-Aminopropyltri-ethoxysilan handeln kann.

Die als Komponente (2) eingesetzten, anspruchsgemäßen Organopolysiloxane stellen neue, im Stand der Technik noch nicht beschriebene Organopolysiloxane dar.

Der Zusatz der Komponente (3) in den erfindungsgemäßen Zubereitungen (Z) ist optional. Verbindungen dieses Typs werden als Booster bezeichnet und sie bewirken auf den behandelten Flächengebilden eine Verbesserung der Wasserabweisung. Gleichzeitig wird aufgrund der Polyfunktionalität des Polyisocyanates eine Vernetzung mit den auf den meisten Substraten immer vorhandenen -OH, -COOH oder -NH₂-Gruppen und nicht umgesetzten Funktionen der Komponente (1) bewirkt, wodurch die Beständigkeit gegenüber Waschprozessen deutlich verbessert und die Resistenz gegenüber Abrasion erhöht wird.

Die Komponente (3) kann sowohl in nicht blockierter als auch in blockierter Form zur Verwendung gelangen. Die nicht blockierten Formen der Komponente (3) werden vorwiegend bei Anwendungen aus unpolaren Medien eingesetzt, weil hierbei eine unerwünschte, vorzeitige Umsetzung der freien NCO-Gruppen mit den reaktionsfähigen aktiven Wasserstoffatomen des Anwendungsmediums vermieden wird.

Die zur Herstellung der Komponente (3) geeigneten, nicht blockierten Di-, Tri- oder Polyisocyanate sowie die cyclisierten Oligo- oder Polyisocyanate sind bereits oben bei der Herstellung des Umsetzungsproduktes (S) in Komponente (1) beschrieben.

Sofern die Komponente (3) aus Anwendungsmedien auf Flächengebilde appliziert werden soll, welche aktive Wasserstoffatome tragen, ist häufig ein Schutz der reaktionsfähigen NCO-Gruppen durch Blockierung mit geeigneten Blockierungsmitteln notwendig. In diesen Fällen erfolgt die Herstellung der Komponente (3) durch Verfahren, bei welchen die vollständige Blockierung der freien NCO-Gruppen von Di-, Tri- oder Polyisocyanaten mit einem Blockierungsagens und gegebenenfalls in einem organischen Lösemittel durchgeführt wird. Um eine vollständige Blockierung zu erzielen, wird üblicherweise ein geringer stöchiometrischer Überschuss an Blockierungsagens eingesetzt. Sofern Produkte für wässrige Anwendungen herzustellen sind, müssen die blockierten Di-, Tri- oder Polyisocyanate, gegebenenfalls gelöst in organischem Lösemittel, unter Verwendung geeigneter Emulgatoren (= Komponente (4)) in Emulsionsform übergeführt werden.

Beispiele für geeignete übliche und bekannte Blockierungsmittel sind aus der DE-A-100 17 651, Absatz 0042 bekannt und bereits in der Beschreibung der Herstellung des Umsetzungsproduktes (S) in Komponente (1) beschrieben.

In einer besonderen Ausführungsform können als Booster solche nicht blockierten Di-, Tri-oder Polyisocyanate eingesetzt werden, deren Selbstemulgierfähigkeit in Wasser durch partielle Umsetzung der Isocyanatgruppen mit Polyalkoxymonoalkylethern unter Zuhilfenahme entsprechender Katalysatorsysteme zu Urethanen verbessert wird. Durch die Anknüpfung von hydrophilen Seitenketten an die Di-, Tri- oder Polyisocyanate wird der HLB-Wert des so hergestellten Urethanes so günstig verändert, dass die an sich wasserunlösliche Verbindung selbstemulgierende Eigenschaften bekommt. Bei den hydrophilen Seitenketten ist eine gewisse Selektion von Art und Menge des Restes vorteilhaft. Bevorzugt gelangen zwischen 4 und 20 Ethylenoxidreste zur Verwendung, optional gemeinsam mit 2 - 6 Propylenoxidresten, wobei diese auch in Blöcken innerhalb der Alkoxykette vorliegen können. Bei solchen gemischt alkoxylierten Seitenketten überwiegt jedoch der Mengenanteil an Ethylenoxyd immer denjenigen des Propylenoxyds. Als Katalysatoren für die Urethansynthese können die dem Fachmann bekannten Systeme auf Basis tertiärer Amine und/oder zinnorganischen Verbindungen, wie beispielsweise Dibutylzinndilaurat, Dioctylzinndilaurat oder -diacetat verwendet werden.

Bei der Anwendung bilden die so hergestellten Urethane beim Eintrag in Wasser spontan feinteilige Emulsionen mit hoher Stabilität gegenüber Scherkräften und guter Verträglichkeit mit den anderen Komponenten einer Applikationsflotte. Wegen der Reaktivität der restlichen, nicht umgesetzten NCO-Gruppen mit Wasser sind bei diesen Spezialformen in der Applikationsflotte nur begrenzte Topfzeiten bis maximal 8 Stunden möglich.

Der Zusatz der Komponente (3) wird insbesondere in Fällen vorgenommen, wo besonders hohe Anforderungen an die Waschbeständigkeiten der behandelten Flächengebilde gestellt werden. Vorzugsweise werden dann 5 - 25 % dieser Verbindung eingesetzt, welche für die Anwendung aus lösemittelhaltigen, wasserfreien Medien direkt und ohne Formulierungshilfsmittel eingesetzt werden kann. Sofern die Applikation aus wässrigem Medium erfolgt, gelangen vorzugsweise Emulsionen der Komponente (3) mit 15 - 35 % Feststoffanteil zum Einsatz, welche unter Verwendung von Emulgatoren (= Komponente (4)) auf Basis ethoxylierter Fettamine, optional in quaternärer Form vorliegend, und gegebenenfalls anderen Emulgierhilfsmitteln, wie beispielsweise Solubilisierungsmitteln auf Basis Ethylenglykol, Propylenglykol, Dipropylenglykol, Dipropylenglykolmonomethylether, Mono- oder Diethylenglykolmonobutylether oder N-Methypyrrolidon hergestellt werden. Die Emulgierung kann dabei unter Zuhilfenahme von Hochdruckhomogenisiermaschinen erfolgen.

Wenn die erfindungsgemäßen Zubereitungen (Z) auf wässriger Basis vorliegen, werden Emulgatoren (= Komponente (4)) eingesetzt. Die für die Formulierung der Komponenten (1), (2) und gegebenenfalls (3) der erfindungsgemäßen Zubereitungen eingesetzten Emulgatoren (= Komponente (4)) sind bekannt. Als Emulgatoren kommen beispielsweise Ethoxylierungsprodukte von Fettsäuren, Fettsäureamiden, Fettalkoholen, Fettaminen, letztere auch in Form ihrer Salze mit niedermolekularen organischen Säuren oder Mineralsäuren sowie quaternäre Ammoniumverbindungen, wie beispielsweise Cetylbenzyldimethylammoniumchlorid und vorzugsweise ethoxyliertes Octadecylmethylammoniumchlorid in Frage. Solche Emulgatoren sind beispielsweise im "Römpp Lexikon Chemie" (10.Auflage, 2. Band, Seite 1149 und 1150) beschrieben.

Die üblichen Anwendungsmengen der Emulgatoren liegen vorzugsweise zwischen 4 und 25 Gew.-%, bezogen auf die Summe der Wirksubstanz der Komponenten (1), (2) und gegebenenfalls (3).
Zur Herstellung der Emulsionen werden die bekannten Methoden zur Bildung von Sekundäremulsionen angewendet. Üblicherweise liegt die Emulgiertemperatur oberhalb des Schmetzbereiches der Wirksubstanzen der verwendeten Komponenten (1), (2) und gegebenenfalls (3), vorzugsweise zwischen 50 und 80°C. Um möglichst feinteilige, besonders stabile Emulsionen zu erzeugen, wird häufig zunächst eine grobteilige Voremulsion hergestellt, deren Partikel anschließend unter Zuhilfenahme von Hochdruckhomogenisatoren auf die notwendige durchschnittliche Teilchengröße zwischen 0,1 und 10 Mikrometer verkleinert werden.

Sofern gewünscht, können die als Reaktionsmedium zur Herstellung der Komponenten (2) und gegebenenfalls (3) zugefügten inerten organischen Lösemittel (LM), wie beispielsweise Ethylacetat, n-Propylacetat, i-Propylacetat, n-Butylacetat, i-Butylacetat oder Amylacetat nach der Emulgierung zur Vermeidung emittierfähiger organischer Kohlenwasserstoffe destillativ entfernt werden.

Weiterer Gegenstand der Erfindung ist die Anwendung der erfindungsgemäßen Zubereitungen gemäß Anspruch 1 als Appretur auf Flächengebilden. Als solche werden für den textilen Anwendungsbereich beispielsweise Gewebe, Gewirke und vorverfestigte Faservliese (Nonwovens) aus nativen Fasern, wie Wolle oder Baumwolle bzw. Synthetikfasern, insbesondere PES-, PA- und Regeneratfasern oder deren Mischungen verwendet.

Der Auftrag auf die textilen Flächengebilde erfolgt im Allgemeinen mit Auflagen von 0,5 - 3 Gew.-%, vorzugsweise 0,5 - 2,5 Gew.-% besonders bevorzugt 0,5 - 2,0 Gew.% der Festsubstanz der erfindungsgemäßen Zubereitung bezogen auf das Gewicht des zu behandelnden Flächengebildes. Üblicherweise wird eine Flotte in der gewünschten Konzentration mittels einer Zwangsapplikation aus wässrigem Medium auf dem Foulard mit Flottenaufnahmen von 40 - 100 %, anschließender Vortrocknung bei 80 - 110°C und einer nachfolgenden Heißbehandlung bei 130 - 170°C während 1 - 5 Minuten vorgenommen. Die Dauer der Hitzebehandlung ist jeweils abhängig von den angewandten Temperaturen.

Eine weitere Auftragsmöglichkeit auf textile Flächengebilde ist durch das dem Fachmann bekannte Ausziehverfahren gegeben.

Bei der Anwendung auf textilen Flächengebilden können die erfindungsgemäßen Zubereitungen auch mit den in der Textilindustrie üblichen Textilhilfsmitteln kombiniert werden. Hervorzuheben sind Mittel, welche die Entknitterungseigenschaften verbessern, beispielsweise Methylolverbindungen des Dihydroxyethylenharnstoffes oder Methylolmelaminether unterschiedlichen Methylolierungsgrades. Ferner kommen als Textilhilfsmittel solche in Betracht, welche die Flammfestigkeit verbessern oder dem Flächengebilde einen bevorzugten Griff verleihen. Der Warengriff kann jedoch durch günstige Kombination der Komponenten (1) bis (3) in der gewünschten Richtung gesteuert werden, weshalb in diesen Fällen auf weitere Textilhilfsmittel verzichtet werden kann.

Die Flächengebilde können auch aus Papier bestehen, welches nach den bekannten Papiermachermethoden und aus allen in diesem Anwendungsbereich üblichen Grundstoffen hergestellt sein kann. Die erfindungsgemäßen Zubereitungen können dabei entweder als Zusatz zur Papiermasse oder durch Auftrag auf die Oberfläche des maschinenglatten Papiers mittels Streichanlagen unter Anwendung von Walzen-, Rakel- oder Luftbürstenstreichverfahren und anschließender Infrarot-, Heißluft- oder Zylindertrocknung angewendet werden.

Flächengebilde aus Leder sind ebenfalls gut für die Appretur mit den erfindungsgemäßen Zubereitungen geeignet. Sofern die Anwendung in den der Gerberei nachgeschalteten Zurichtungsprozessen erfolgt, kann dies mit den bekannten Auftragsverfahren oder durch Sprühen oder Tränken erfolgen.

Die Behandlung anderer Flächengebilde ist ebenfalls möglich. So können mineralische Flächengebilde, wie z.B. nicht lasierte Fliesen, Keramikteile oder auch Wandflächen durch Tränken mit der erfindungsgemäßen Appreturflotte hervorragende Wasserabweisung erhalten.

Die Behandlung der Flächengebilde kann durch verschieden Methoden erfolgen, z. B. durch Applikation einer Flotte der erfindungsgemäßen Zubereitung mittels Sprühen, Pflatschen, Pinsel- oder Schwammauftrag, gegebenenfalls auch in Schaumform. Im Allgemeinen werden Auflagen von 0,5 - 3 Gew.-%, vorzugsweise 0,5 - 2,5 Gew.-%, besonders bevorzugt 0,5 - 2,0 Gew.% der Festsubstanz der erfindungsgemäßen Zubereitung bezogen auf das Gewicht des zu behandelnden Flächengebildes verwendet.

Weiterer Gegenstand der Erfindung ist die Anwendung der erfindungsgemäßen Zubereitungen (gemäß Anspruch 3) auf textilen Substraten, wobei die Appretur als Nachbehandlung gewaschener Textilien erfolgt.

Viele konfektionierte Artikel werden entweder im häuslichen Bereich auf Haushaltswaschmaschinen oder auf Industriewaschmaschinen gewaschen. Letzteres trifft in hohem Ausmaß auf die Berufsbekleidung von Mitgliedern der Feuerwehr. Polizei, Militär und anderen Berufszweigen zu, welche sich häufig im Freien aufhalten müssen und damit der Witterung ausgesetzt sind. Die üblicherweise öl-, wasser- und schmutzabweisend appretierten Kleidungsstücke erleiden durch die Wäsche einen Verlust dieser Eigenschaften. Häufig werden daher durch eine Nachbehandlung mit Phobiermitteln diese Eigenschaften wieder aufgefrischt und revitalisiert. Die erfindungsgemäßen Zubereitungen können für diese Anwendung Einsatz finden.

Die revitalisierende Behandlung der industriell gewaschenen, konfektionierten Artikel erfolgt in der Wasch- bzw. Schleudertrommel durch Aufgießen einer Flotte der erfindungsgemäßen Zubereitungen auf die schleuderfeuchten Waschartikel und anschließendes Trocknen im Tumbler. Bei Haushaltswaschmaschinen kann die Appretur mittels des üblichen Nachbehandlungsspülganges oder eines Dosierkugelsystems erfolgen.

Weiterer Gegenstand der Erfindung ist die Anwendung der erfindungsgemäßen Zubereitungen als Appretur auf Flächengebilden mit der Maßgabe, dass die Anwendung aus organischen Lösemitteln im Tränk- oder Tauchverfahren erfolgt.

Viele Kleidungsstücke werden nicht gewaschen, sondern einer Reinigung in organischen Lösemitteln unterzogen. Ähnlich wie bei der Nachbehandlung gewaschener Artikel können auch hier durch Auffrischen mit Produkten auf Basis der erfindungsgemäßen Zubereitungen die hydrophoben Eigenschaften revitalisiert werden.

Die revitalisierende Behandlung der in organischen Lösemitteln gereinigten, konfektionierten Artikel erfolgt in der Reinigungstrommel der Chemischreinigungsmaschinen durch Aufgießen oder Aufsprühen einer Flotte der erfindungsgemäßen Zubereitungen auf die schleuderfeuchten, gereinigten Artikel und anschließendes Entfernen der Lösemittel im Tumbler bei erhöhten Temperaturen. Dabei ist der chemische Charakter des reinigenden Agens unerheblich, d.h. die Behandlung kann sowohl auf modernen Maschinen in geschlossenen Systemen mit Perchlorethylen erfolgen oder auf solchen, welche für die Behandlung mit Lösemitteln auf Kohlenwasserstoffbasis, wie beispielsweise Isopar J geeignet sind.

Weiterer Gegenstand der Erfindung ist die Anwendung der erfindungsgemäßen Zubereitungen als Appretur auf Flächengebilden mit der Maßgabe, dass die Anwendung aus organischen Lösemitteln mittels Sprühmethoden erfolgt.

Anstelle einer revitalisierenden Behandlung textiler Flächengebilde nach Wasch- oder Reinigungsprozessen durch Auftrag der erfindungsgemäßen Zubereitungen aus kontinuierlichen, wässrigen- oder lösemittelhaltigen Flotten kann für die Anwendung im häuslichen Bereich (Consumer Care Bereich) die Applikation der erfindungsgemäßen Zubereitungen auch mittels diverser Sprühmethoden vorgenommen werden. Hierfür werden Phobiermittel, formuliert in organischen Lösemitteln und Treibgasen aus Sprühdosen oder durch Pumpmechanismen angeboten. Insbesondere für den Schuhpflegebereich ist erhebliche Verbesserung der Wasserabweisung und damit des Tragekomforts zu erzielen.

Weiterer Gegenstand der Erfindung sind textile Substrate mit einer Appretur, welche bei der Anwendung der erfindungsgemäßen Zubereitungen erhalten wurden.

Die nachfolgenden Beispiele erläutern die Erfindung. Die Applikation der Appreturen auf textilen Flächengebilden erfolgte auf einem Laborfoulard der Type LFV 350/2 "RFA" (Fa. Benz, Schweiz) mit nachfolgender Trocknung und Heißbehandlung auf einem Laborspannrahmen der Type TKF 151M 350 (Fa. Benz, Schweiz). Sofern Sprühapplikation durchgeführt wurde, erfolgte dies im geschlossenen Abzug durch manuellen und einseitigen Auftrag mittels Pumpspray auf das aufgespannte Flächengebilde mit anschließender Trocknung bei Raumtemperatur während 24 Stunden. Die Bestimmung der Flottenaufnahme erfolgte durch Auswiegen der appretierten Testmuster vor und nach der Applikation.

Die Prüfung der hydrophoben Effekte erfolgte nicht unmittelbar nach der Applikation, sondern erst nach einer Konditionierung der Substrate im Normklima während 24 Stunden, um Einflüsse auf diese Eigenschaften durch Übertrocknung zu nivellieren. Auflagemengen sowie die Bedingungen der Heißbehandlung sind gemeinsam mit den zu erzielenden Phobiereffekten in den Tabellen 3a und 3b aufgeführt.

Die Wasserabweisung wurde auf den textilen Flächengebilden sowohl mittels Spraytest gemäß AATCC Standard Test Method 22 als auch mittels des wesentlich stärker differenzierenden "Bundesmanntests" gemäß DIN 53 888 getestet. Die Prüfung gemäß AATCC Standard Test Method 22 erfolgt durch Aufsprühen von destilliertem Wasser unter kontrollierten Bedingungen auf das zu testende textile Substrat und anschließenden visuellen Vergleich des Benetzungsmusters zu Bildern eines in der Testmethode aufgeführten Beurteilungsstandards. Die angegebenen Zahlenwerte beziehen sich dabei auf das Erscheinungsbild der Oberfläche nach dem Aufsprühen des Wassers und haben folgende Bedeutung:
100 = Kein Anhaften von Wassertropfen oder Benetzung der oberen Oberfläche
90 = Vereinzeltes Anhaften von Wassertropfen oder Benetzung der oberen Oberfläche
80 = Benetzung der oberen Oberfläche an den Auftreffpunkten des Wassers
70 = Teilweise Benetzung der ganzen oberen Oberfläche
50 = Vollständige Benetzung der ganzen oberen Oberfläche
0 = Vollständige Benetzung der ganzen oberen und unteren Oberfläche (Durchnetzung).

Beim wesentlich stärker differenzierenden "Bundesmanntest" gemäß DIN 53 888 wird das zu testende textile Substrat der Einwirkung eines definierten künstlichen Regens ausgesetzt und die nach einer bestimmtem Dauer aufgenommene Wassermenge in Prozent bestimmt und ist in den Tabellen 3a und 3b als "Wasseraufnahme" gekennzeichnet. Weiterhin wird der in Tabellen 3a und 3b als "Abperleffekt" gekennzeichnete Wasser-Abperleffekt zur Beurteilung herangezogen. Dieser wird durch visuellen Vergleich der beregneten Testmuster mit in der DIN-Vorschrift aufgeführten Bildern nach 5 Noten beurteilt, die wie folgt gekennzeichnet sind:
Note 5 = Kleine Tropfen perlen lebhaft ab
Note 4 = Ausbildung größerer Tropfen
Note 3 = Tropfen bleiben stellenweise auf der Messprobe hängen
Note 2 = Messprobe teilweise angenetzt
Note 1 = Messprobe auf der gesamten Fläche an- bzw. durchgenetzt.

Um die Beständigkeit der appretierten Flächengebilde gegenüber Waschprozessen zu prüfen, wurden die Testmuster gemäß EN ISO 6330:2000 bei 60°C gewaschen und getrocknet.

Die Wasserdampfdurchlässigkeit wird analog zu ISO 11092 als Wasserdampfdurchgangswiderstand (Rₑₜ-Wert ; water-vapor resistance) gemessen. Für eine differenzierende Beurteilung von Textilien können folgende Kriterien angesetzt werden:
Rₑₜ ≤ 6 m²Pa/W sehr gut
Rₑₜ ≤ 13 m²Pa/W gut
Rₑₜ ≤ 20 m²Pa/W befriedigend
Rₑₜ ≳ 20 m²PA/W unbefriedigend

### Beispiele zur Herstellung der Komponente (1)

### Komponente (A):

### Allgemeine Herstellungsvorschrift für Komponenten (A) der Formel (I) und/oder (II)

In einem geeignet dimensionierten Dreihalskolben, ausgestattet mit Destillationskühler, regelbarem Rührer und Innenthermometer werden die in den Tabellen 1 a und 1 b angegebenen Komponenten (a1, a2 oder a3) und (b1) in den dort angegebenen Mengen in Gramm unter Schutzgas und Rühren aufgeschmolzen. Anschließend wird das Gemisch auf die in denTabellen 1 a und 1 b angegebene Endtemperatur (T) aufgeheizt und solange weitergerührt bis kein Reaktionswasser mehr abdestilliert und die in den Tabellen 1a und 1 b genannten Säurezahl (SZ) erreicht ist. Bedarfsweise kann bei den Veresterungsreaktionen 0,1 % Schwefelsäure als Katalysator zugesetzt werden. Bei den Amidierungsreaktionen ist kein Zusatz von Katalysator notwendig. Das resultierende Kondensationsprodukt wird ausgegossen und nach dem Abkühlen zu Schuppen verarbeitet.

### Komponente (A):

### Besondere Herstellungsvorschrift für Komponenten (A) der Formel (I) und/oder (II)

### unter Verwendung von Alkylisocyanaten (b2) und Weiterverarbeitung zum Umsetzungsprodukte (S)

In einem geeignet dimensionierten Dreihalskolben, ausgestattet mit Rückflußkühler, regelbarem Rührer, Innenthermometer und Tropftrichter werden die in den Tabellen 1 a und 1 b angegebenen Komponenten (a1) und (b2) in Gramm in Isopropylacetat (Lösungsmittel (LM)) vorgelegt. Anschließend werden, bezogen auf die Gesamtmenge der Komponenten, 0,05 % 1,4-Diazabicylo(2,2,2)octan als Katalysator zugesetzt und die Mischung solange bei 80°C gerührt, bis im IR-spektrum keine NCO-Bande mehr erkennbar ist.

Anschließend wird dem Gemisch zur Herstellung des Umsetzungsproduktes (S) die in den Tabellen 1 a und 1 b angegebenen Mengen in Gramm von Komponente (IC) zugegeben und solange bei 80°C weitergerührt, bis im IR-spektrum keine NCO-Bande mehr erkennbar ist.

### Umsetzungsprodukte (S) (= Komponente (1)):

### Allgemeine Herstellungsvorschrift für Umsetzungsprodukte (S) aus einer Komponente (A) und nicht blockierten oder teilblockierten Di-, Tri- oder Polyisocyanaten (IC)

In einem geeignet dimensionierten Dreihalskolben, ausgestattet mit Rückflußkühler, regelbarem Rührer, Innenthermometer und Tropftrichter werden die in den Tabellen 1 a und 1 b angegebenen Komponenten (A) und die Komponenten (IC) in den dort angegebenen Mengen in Gramm in Isopropylacetat (LM) vorgelegt. Anschließend werden, bezogen auf die Gesamtmenge der Komponenten, 0,05 % 1,4-Diazabicylo(2,2,2)octan als Katalysator zugesetzt und die Mischung solange bei 65°C gerührt, bis im IR-spektrum keine NCO-Bande mehr erkennbar ist.

### Besondere Herstellungsvorschrift für die in den Emulsionen (E) 3 und 9 eingesetzten Umsetzungsprodukte (S)

Zur Herstellung der Emulsionen (E) 3 gemäß Tabelle 1 a wird ein Umsetzungsprodukt (S) verwendet, bei dessen Herstellung (Reaktion der Komponente (A) mit dem Isocyanat (IC)) noch die in der Tabelle 1 a angegebenen Menge in Gramm Dimethylaminoethanol zugesetzt werden.
Zur Herstellung der Emulsionen (E) 9 gemäß Tabelle 1a wird ein Umsetzungsprodukt (S) verwendet, bei dessen Herstellung (Reaktion der Komponente (A) mit dem Isocyanat (IC)) noch die in der Tabelle 1a angegebenen Menge in Gramm Bisoctadecylamin zugesetzt werden.

### Emulsionen (E):

### Allgemeine Herstellungsvorschrift für Emulsionen (E) aus Komponente (1) bzw. den Umsetzungsprodukten (S) und Komponente (2)

**Ölige Phase:** In einem geeignet dimensionierten Becherglas werden die in Tabelle 1 a und 1 b angegebenen Mengen in Gramm von Umsetzungsprodukt (S), vorliegend im vorstehend genannten Isopropylacetat und der Komponente (2) vorgelegt und unter Rühren auf 65 - 70°C aufgeheizt, bis sich eine klare, homogene Lösung ergibt. Das zu verwendende Umsetzungsprodukt (S) muss gegebenenfalls vor der Anwendung bei 65 - 70°C aufgeschmolzen werden, um ein homogenes Produkt zu erhalten.

**Wässrige Phase:** In einem geeignet dimensionierten Becherglas werden die in den Tabellen 1a und 1b angegebenen Mengen in Gramm an Emulgatoren (Em) (= Komponente (4)) in der angegebenen Menge Wasser bei 65°C gelöst.
Unter einem Schnellrührer werden beide Phasen zu einer grobteiligen Voremulsion verrührt und anschließend bei 65°C auf der Hochdruckhomogenisiermaschine bei 300 - 500 bar homogenisiert, bis eine durchschnittliche Teilchengröße zwischen 0,1 und 10 Mikrometer erreicht ist. Anschließend wird das Lösemittel (LM) auf dem Rotationsverdampfer im Vakuum durch azeotrope Destillation entfernt. Gegebenenfalls wird der pH-Wert der erhaltenen Emulsion mit Essigsäure 60%ig auf 5 - 7 eingestellt, die erhaltene weiße Emulsion über ein Filter mit 20 Mikrometer filtriert und mit Wasser auf einen Feststoffgehalt von 25 % eingestellt.

Die in der Tabelle 1 b beschriebenen Emulsionen (E) 10 - 12 enthalten ein Paraffin-Wachs (nicht erfindungsgemäß) anstelle der Komponente (2), und wurden zum Vergleich hergestellt.

### Beispiele zur Herstellung der Komponente (2)

### Organopolysiloxan 1

71,99 g (0,28 mol) n-Octadecen und 2,5 g (0,02 mol) Allylglycidylether werden mit 0,2 g einer 2% igen Hexachloroplatinsäurelösung in Methylpropylketon versetzt und unter einer Stickstoffatmosphäre auf 120 °C erhitzt. Nun tropft man bei dieser Temperatur langsam 205 g ( 0,30 mol SiH) eines Methylwasserstoffpolysiloxanes mit einer Kettenlänge von m = 50 und einer Anzahl von 30 Si-H-Gruppen (b' = 30), hergestellt analog zu US 5578692 (Beispiel 1), zu. Nachdem man 2 h bei 120 °C nachgerührt hat, erhitzt man auf 140 °C und gibt 1,5 g (0,008 mol) Bis-[3-(dimethylamino)-propyl]-amin hinzu. Man rührt 1 h bei 140 °C und erhält nach Abkühlen 94,7 g eines hellgrauen Wachses, welches einen Stickstoffgehalt von 0,30 % hat. Das Epoxidequivalent beträgt 7958 g/eq. und der der Gehalt an C₈-C₂₈-Alkylresten im Organopolysiloxan 65 Gewichtsprozent. Das Wachs wird zur Herstellung der Emulsion (E) 1, 2 und 3 in Tabelle 1 a verwendet.

### Organopolysiloxan 2

130 g (0,580 mol) n-Hexadecen und 4,6 g (0,040 mol) Allylglycidylether werden mit 0,4 g einer 2% igen Hexachloroplatinsäurelösung in Methylpropylketon versetzt und unter einer Stickstoffatmosphäre auf 120 °C erhitzt. Nun tropft man bei dieser Temperatur langsam 53,9 g ( 0,62 mol SiH) eines Methylwasserstoffpolysiloxanes mit einer Kettenlänge von m = 100 und einer Anzahl von 75 Si-H-Gruppen (b' = 50), hergestellt analog zu US 5578692 (Beispiel 1), zu. Nachdem man 2 h bei 120 °C nachgerührt hat, erhitzt man auf 140 °C und gibt 2,0 g (0,02 mol) Bis-[3-(dimethylamino)-propyl]-amin hinzu. Man rührt 1 h bei 140 °C und erhält nach Abkühlen 190,9 g eines hellgrauen Wachses, welches einen Stickstoffgehalt von 0,29 % hat. Das Epoxidequivalent beträgt 9380 g/eq. und der der Gehalt an C₈-C₂₈-Alkylresten im Organopolysiloxan 68 Gewichtsprozent. Das Wachs wird zur Herstellung der Emulsion (E) 4,5 und 6 in Tabelle 1a verwendet.

### Organopolysiloxan 3

74,1 g (0,33 mol) n-Hexadecen werden mit 0,3 g einer 2% igen Hexachloroplatinsäurelösung in Methylpropylketon versetzt und unter einer Stickstoffatmosphäre auf 120 °C erhitzt. Nun tropft man bei dieser Temperatur langsam 60,0 g ( 0,33 mol SiH) eines Methylwasserstoffpolysiloxanes mit einer Kettenlänge von m = 500 und einer Anzahl von 190 Si-H-Gruppen (b' = 190), hergestellt analog zu US 5578692 (Beispiel 1), zu. Nachdem man 2 h bei 120 °C nachgerührt hat, kühlt man man auf 60 °C ab und gibt 9,0 g (0,050 mol) 3-Aminopropyltrimethoxysilan und eine Lösung von 0,15 g KOH in 1,59 g Wasser hinzu. Man rührt 30 min bei 60°C und erhitzt dann auf 110 °C. Nun gibt man 3,0 g (0,136 mol) Glycidyloxypropyldimethoxymethylsilan und rührt 1 h bei 110 °C.
Man erhält nach dem Abkühlen 148,1 g eines hellgrauen Wachses, welches einen Stickstoffgehalt von 0,47 % hat. Das Epoxidequivalent beträgt 10863 g/eq. und der der Gehalt an C₈-C₂₈-Alkylresten im Organopolysiloxan 50 Gewichtsprozent. Das Wachs wird zur Herstellung der Emulsion (E) 7, 8 und 9 in Tabelle 1a verwendet.

### Herstellung der erfindungsgemäßen Zubereitungen (Z)

Die in der Tabelle 2 aufgeführten Emulsionen (E), enthaltend die Komponenten (1), (2) und (4) werden gegebenenfalls mit der Komponente (3) und gegebenenfalls Wasser in den angegebenen Gewichtsverhältnissen gemischt, wobei die in den Tabelle 2a und 2b genannten Zubereitungen (Z) erhalten werden.

### Appreturbeispiele

### Anwendung von Zubereitungen (Z) auf wässriger Basis auf textilen Flächengebilden : Ausrüstungskonditionen und Prüfergebnisse sind in den Tabellen 3a, 3b und 4 aufgeführt.

### Anwendung von Zubereitungen (Z) auf Lösemittelbasis auf textilen Flächengebilden (in den Tabellen 3a und 3b nicht aufgeführt):

Für diese Anwendung werden 5 g des in Tabelle 1a in der Spalte mit der Nummer 3 aufgeführten Umsetzungsproduktes (S) mit 5 g des Organopolysiloxanes 3 in 190 g Isopropylacetat gelöst. Mittels eines Pumpzerstäubers wird die Lösung aus einer Distanz von etwa 30 cm auf die in Tabelle 3a und 3b beschriebenen Baumwoll- und Polyestersubstrate aufgesprüht, bis die Oberflächen einheitlich benetzt sind. Anschließend wird während 24 Stunden bei Raumtemperatur getrocknet. Die behandelten Testgewebe aus Baumwoll-Popeline und Polyester zeigen eine Wasserabweisung gemäß AATCC Standard Test Method von 100.

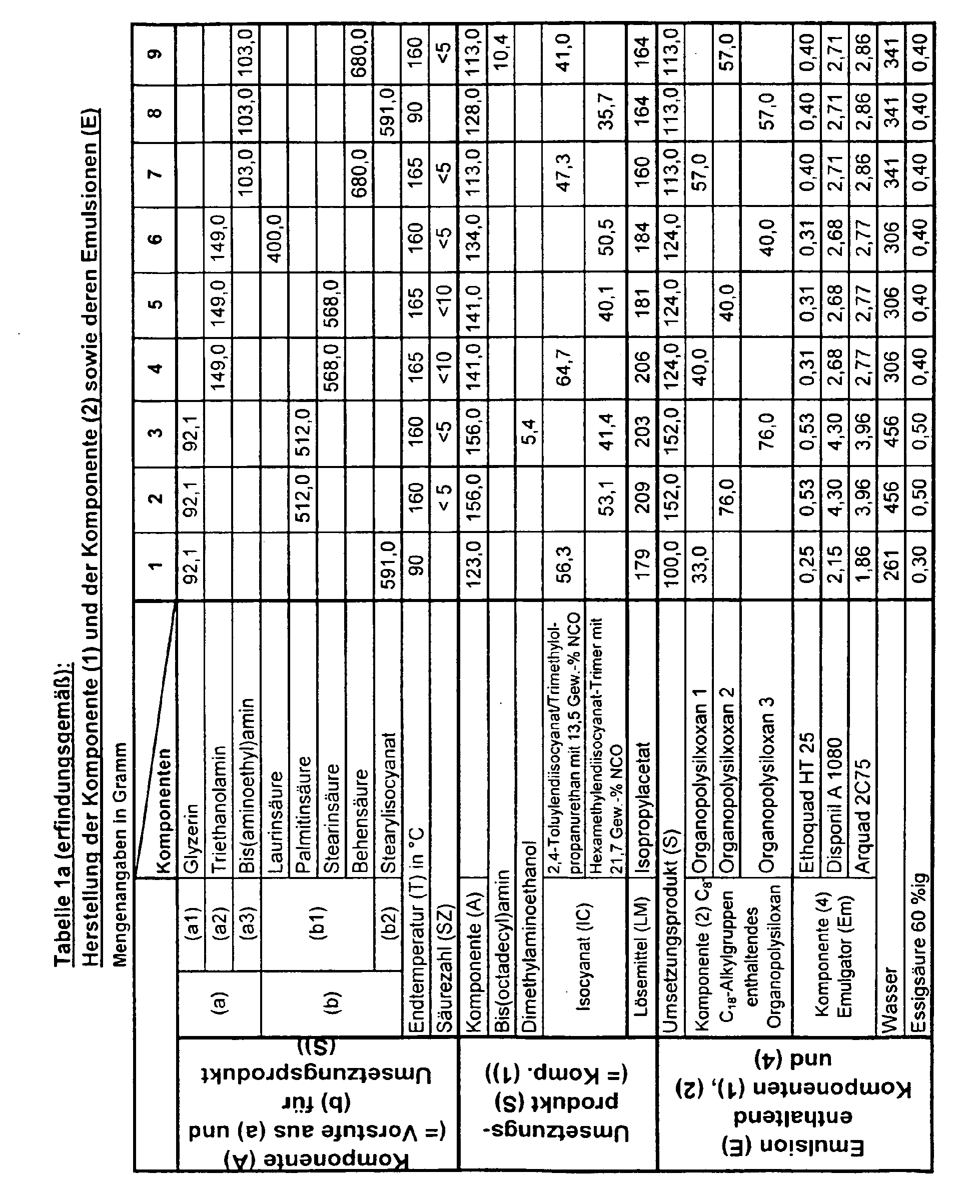

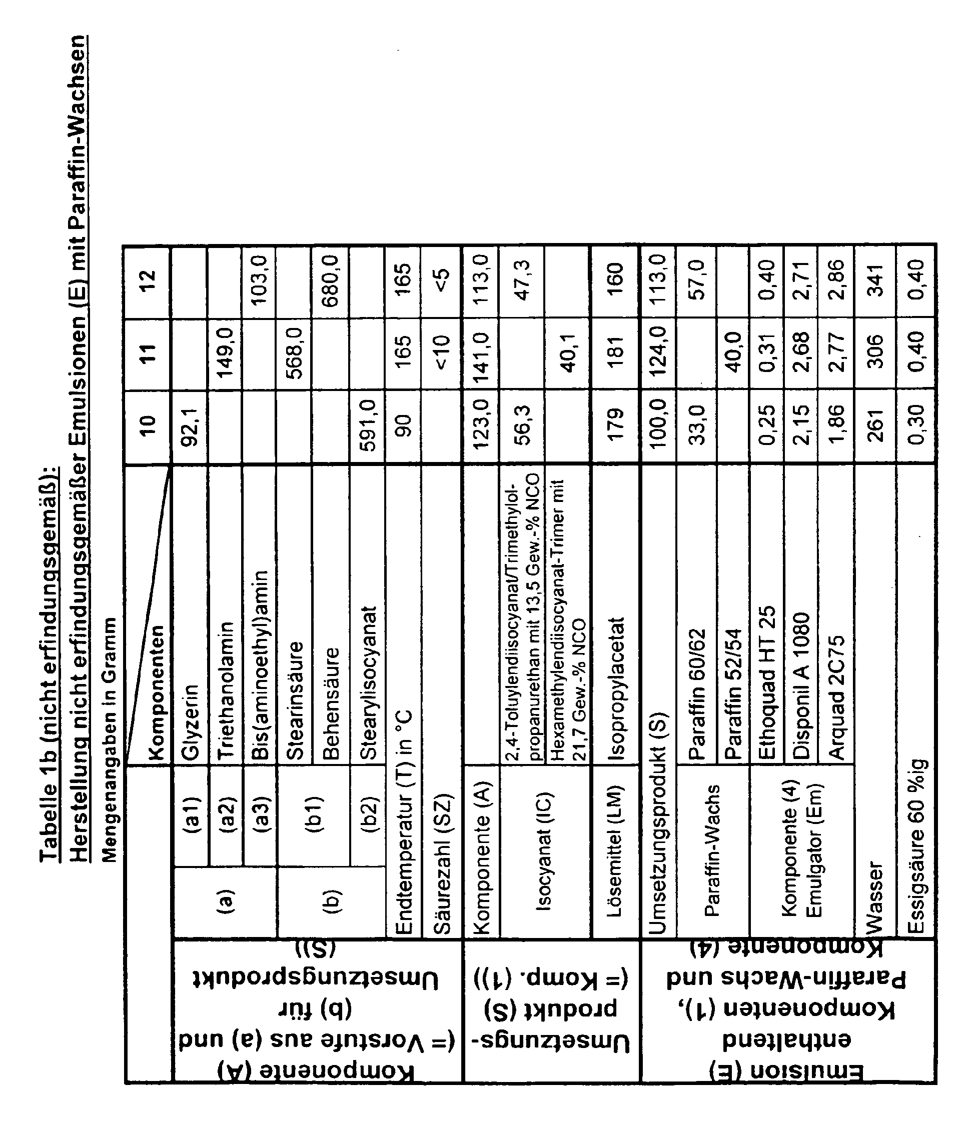

**Tabelle 2a:**

| **Mischungsverhältnisse der erfindungsgemäßen Zubereitungen (Z)** | | | |
|---|---|---|---|
| | | | |
| **Gew.Teile Emulsion (E), enthaltend Komponente (1), (2) und (4)** | **Gew.Teile Komponente (3) RUCO-GUARD EPF 1660** | **Gew.Teile Wasser** | **Zubereitung (Z)** |
| 90 von (E) 1 | - | 10 | 1 (erfindungsgemäß) |
| 90 von (E) 1 | 10 | - | 2 (erfindungsgemäß) |
| 90 von (E) 2 | - | 10 | 3 (erfindungsgemäß) |
| 90 von (E) 2 | 10 | - | 4 (erfindungsgemäß) |
| 90 von (E) 3 | - | 10 | 5 (erfindungsgemäß) |
| 90 von (E) 3 | 10 | - | 6 (erfindungsgemäß) |
| 90 von (E) 4 | - | 10 | 7 (erfindungsgemäß) |
| 90 von (E) 4 | 10 | - | 8 (erfindungsgemäß) |
| 90 von (E) 5 | - | 10 | 9 (erfindungsgemäß) |
| 90 von (E) 5 | 10 | - | 10 (erfindungsgemäß) |
| 90 von (E) 6 | - | 10 | 11 (erfindungsgemäß) |
| 90 von (E) 6 | 10 | - | 12 (erfindungsgemäß) |
| 90 von (E) 7 | - | 10 | 13 (erfindungsgemäß) |
| 90 von (E) 7 | 10 | - | 14 (erfindungsgemäß) |
| 90 von (E) 8 | - | 10 | 15 (erfindungsgemäß) |
| 90 von (E) 8 | 10 | - | 16 (erfindungsgemäß) |
| 90 von (E) 9 | - | 10 | 17 (erfindungsgemäß) |
| 90 von (E) 9 | 10 | - | 18 (erfindungsgemäß) |

**Tabelle 2b:**

| **Mischungsverhältnisse der nicht erfindungsgemäßen Zubereitungen (Z)** | | | |
|---|---|---|---|
| | | | |
| **Gew.Teile Emulsion (E), enthaltend Komponente (1), Paraffin-Wachs und (4)** | **Gew.Teile Komponente (3) RUCO-GUARD EPF 1660** | **Gew.Teile Wasser** | **Zubereitung (Z)** |
| 90 von (E) 10 | - | 10 | 19 (nicht erfindungsgemäß) |
| 90 von (E) 10 | 10 | - | 20 (nicht erfindungsgemäß) |
| 90 von (E) 11 | - | 10 | 21 (nicht erfindungsgemäß) |
| 90 von (E) 11 | 10 | - | 22 (nicht erfindungsgemäß) |
| 90 von (E) 12 | - | 10 | 23 (nicht erfindungsgemäß) |
| 90 von (E) 12 | 10 | - | 24 (nicht erfindungsgemäß) |

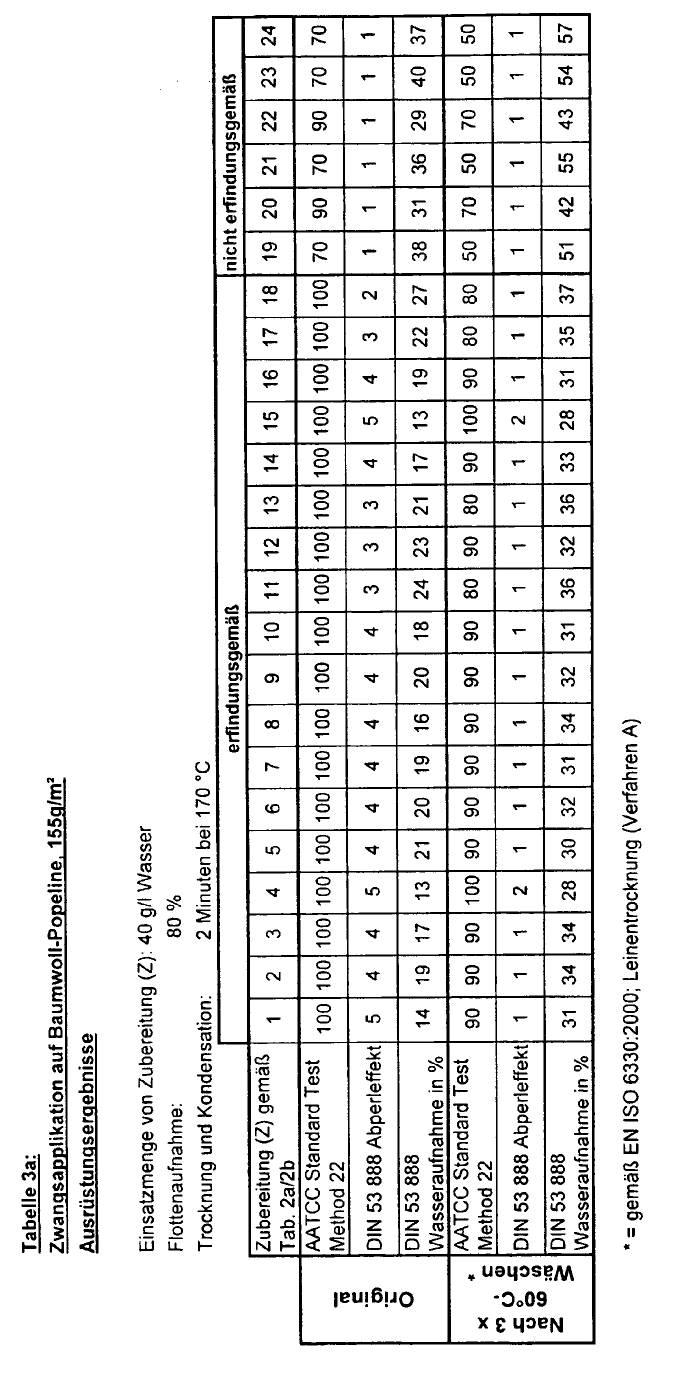

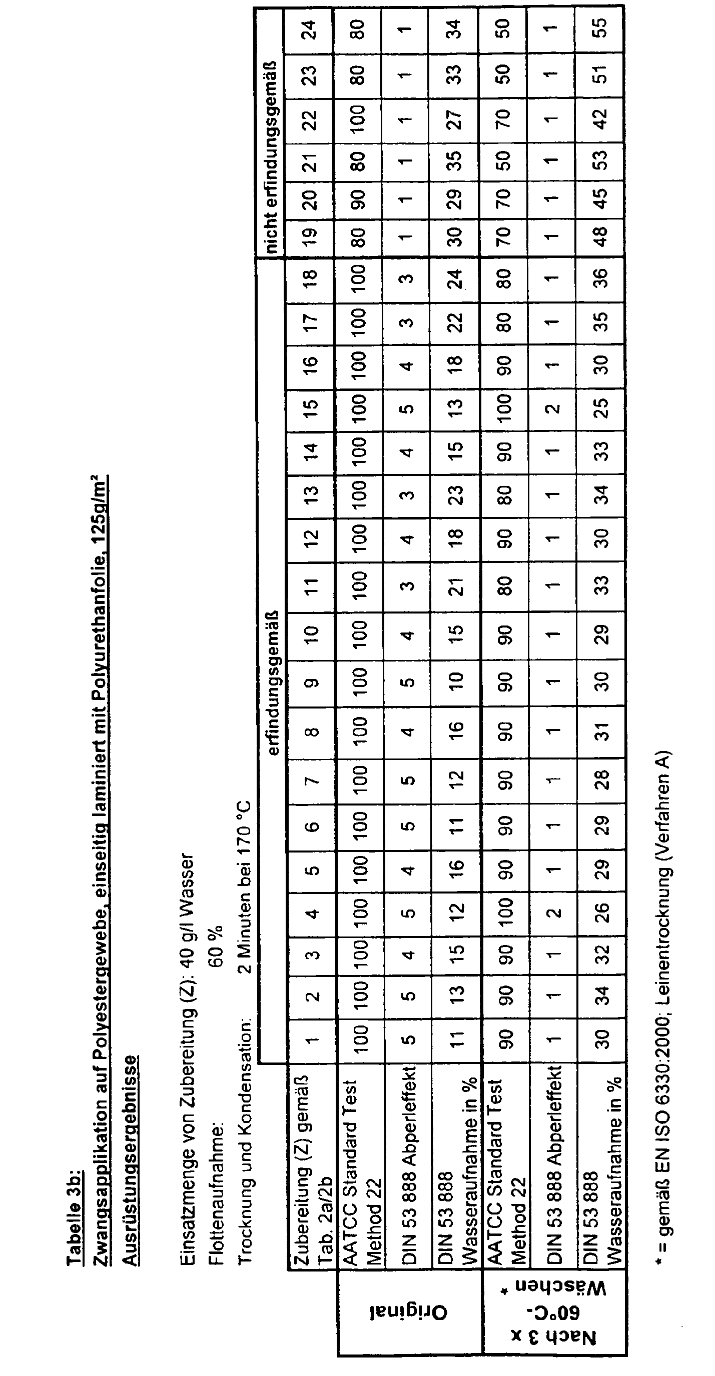

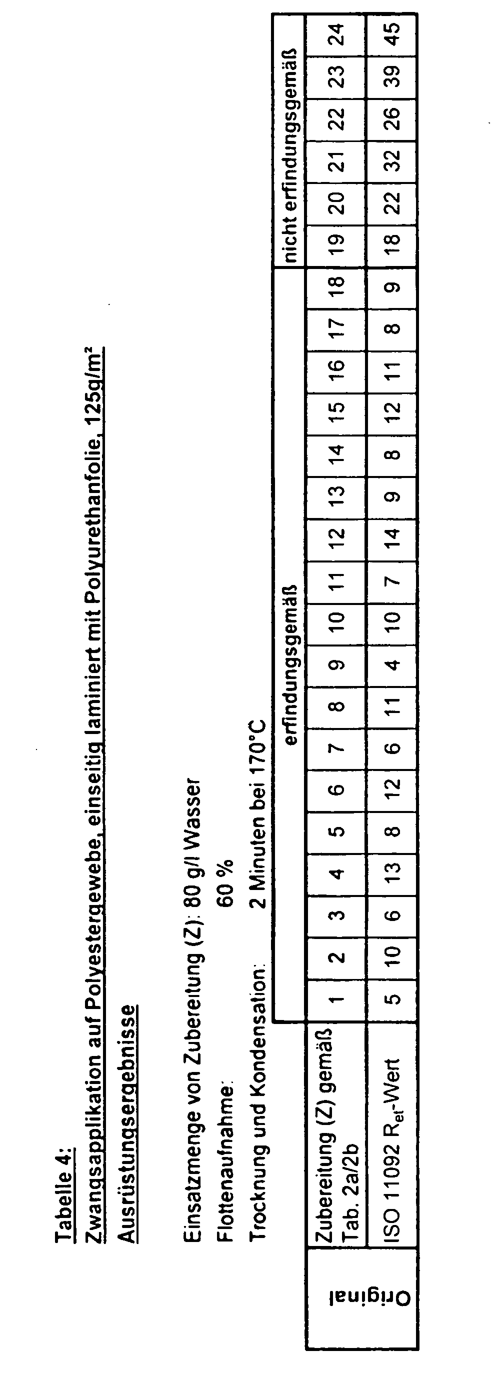

## Patentansprüche

1. Fluorkohlenstoffpolymer-freie Zubereitungen (Z) auf Basis von Wasser und/oder organischen Lösemitteln **gekennzeichnet durch** den Gehalt folgender Einzelkomponenten:
(1) 10 - 90 % eines hydrophoben Umsetzungsproduktes (S), erhältlich durch Umsetzen einer Komponente (A) der 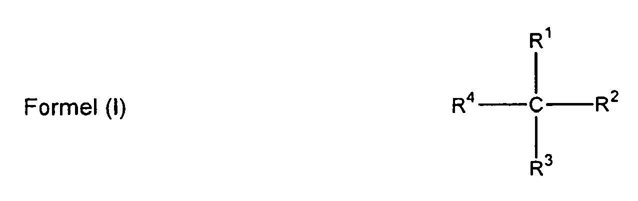 und/oder der 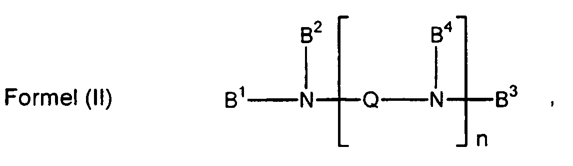 wobei R¹ ein hydrophober Rest der Bedeutung -X-Y-Z oder -Z ist, in welchem
X = -(CH₂)_{n"}-, 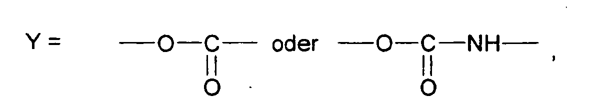
Z = -(CH₂)ₘ-CH₃ bedeuten,
R² ein Rest der Zusammensetzung 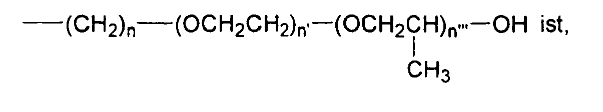 R³ ein hydrophober Rest der Bedeutung -X-Y-Z, -Z oder -Y-Z ist, mit der Maßgabe, dass im Falle der Bedeutung -Y-Z dann im Rest R^{Z} n immer **durch** n" ersetzt ist,
R⁴ ein Rest der Bedeutung -X-Y-Z oder -(CH₂)_{n'}H ist,
B¹ ein hydrophober Rest der Bedeutung -V-W-Z oder -Z ist, in welchem 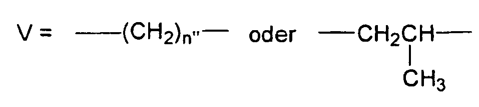 ist, 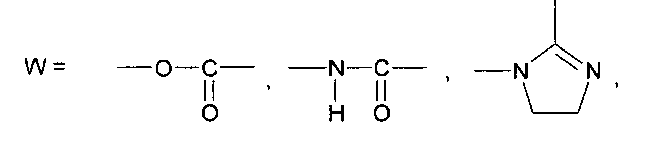 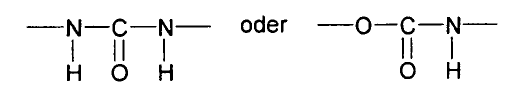 ist, 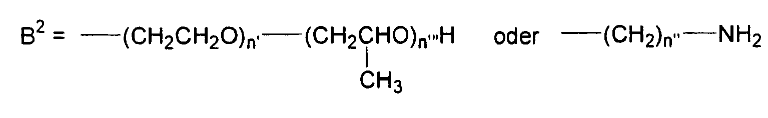 ist,
B³ = ein hydrophober Rest der Bedeutung -V-W-Z; -Z oder 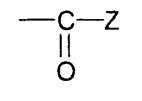 ist,
B⁴ = -V-W-Z oder 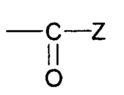 ist und
Q = die Bedeutung -(CH₂)_{n"}- hat,
| | | |
|---|---|---|
| n, n', n", n"' und m unabhängig voneinander ganze Zahlen der Bedeutung | | |
| n | = | 0 - 2, |
| n' | = | 0 - 4, |
| n" | = | 1 - 4, |
| n"' | = | 0 - 4 und, |
| m | = | 12 - 26, sind, |
mit einem nicht blockierten oder teilblockierten Di-, Tri- oder Polyisocyanat (IC), wobei der Anteil an freien NCO-gruppen zwischen 1,8 und 10 pro Mol liegt und das Verhältnis der freien NCO-Gruppen zu den reaktionsfähigen Gruppen der Verbindungen der Formeln (I) und/oder (II) 1 : 1 bis 1 : 1,3 ist,
(2) 10 - 90 % eines C₈-C₂₈-Alkylgruppen enthaltenden Organopolysiloxanes, das aus Strukureinheiten der Formeln (IIIa, IIIb, IIIc, IV), 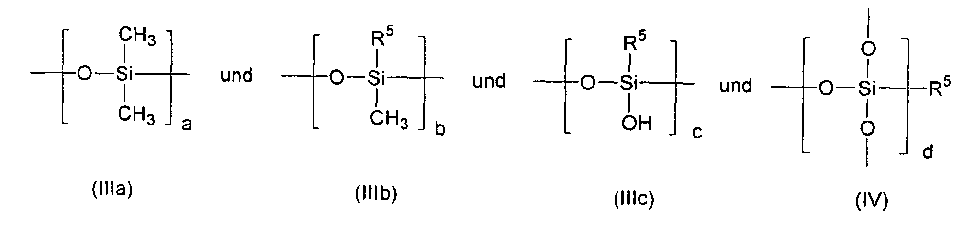 und Endgruppen der Formeln (Va, Vb, Vc) 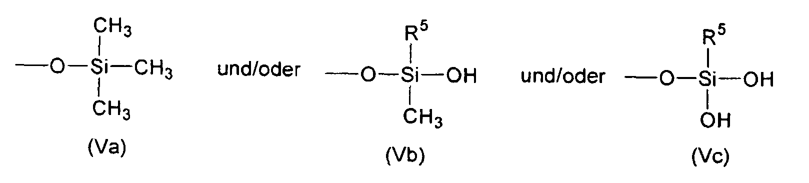 aufgebaut ist,
wobei R⁵ in den Formeln (IIIb), (IIIc), (IV), (Vb) und (Vc) unabhängig voneinander für einen linearen oder verzweigten C₈-C₂₈-Alkylrest oder
einen Rest der Bedeutung 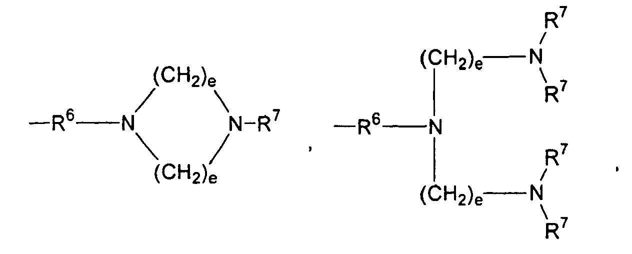 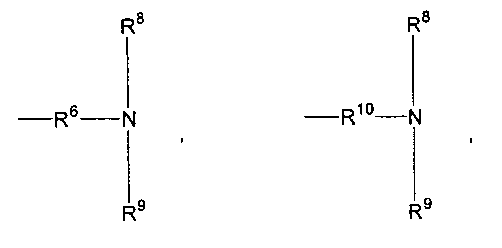
-(CH₂)_{f}-NH-(CH₂)g-NH₂ -(CH₂)_{g}-NH₂. 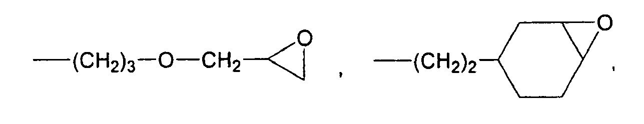
oder 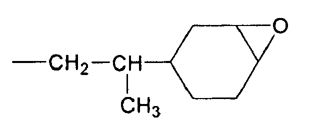 steht,
wobei R⁶ ein Rest der Bedeutung 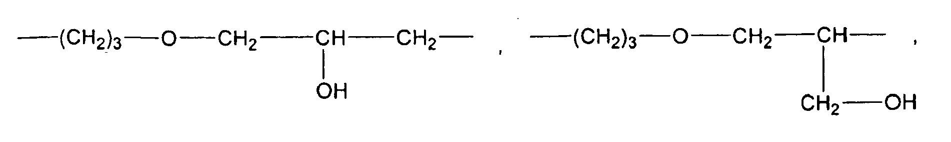 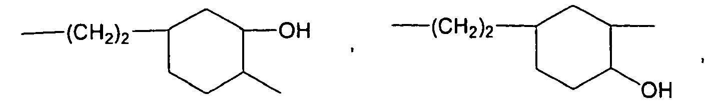 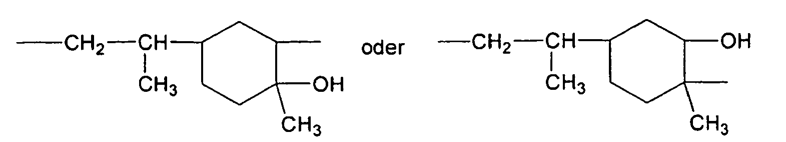 ist,
R⁷ ein linearer oder verzweigter C₁-C₄ Alkylrest ist,
R⁸ und R⁹ gleiche oder verschiedene, lineare oder verzweigte C₁-C₁₈ Alkylreste sind ,
R¹⁰ ein Rest der Bedeutung 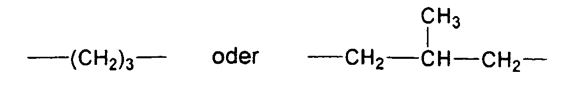 ist
a = eine ganze Zahl von 0 - 700,
b = eine ganze Zahl von 0 - 900,
c = eine ganze Zahl von 0 - 200,
d = eine ganze Zahl von 0 - 100 ist,
wobei a + b + c + d = 10 - 1000
und b+c ≥10 ist,
e = die ganze Zahl 2 oder 3,
f = die ganze Zahl 2 oder 3,
g = die ganze Zahl 2 oder 3
ist,
mit der Maßgabe, dass der Gesamtstickstoffgehalt des Organopolysiloxanes 0,15 - 1,00 Gewichtsprozent beträgt, das Epoxidequivalent des Organopolysiloxanes 1000 - 25000 g/eq. beträgt und der Gehalt an C₈-C₂₈-Alkylresten im Organoolysiloxan 25 - 86 Gewichtsprozent beträgt.
(3) 0 - 45 % eines nicht blockierten oder blockierten Di-, Tri- oder Polyisocyanates und
(4) gegebenenfalls übliche Emulgatoren.

2. Anwendung der Zubereitungen gemäß Anspruch 1 als Appretur auf Flächengebilden.

3. Anwendung der Zubereitungen gemäß Anspruch 2 als Appretur auf textilen Substraten, Papier, Leder und mineralischen Flächengebilden.

4. Anwendung der Zubereitungen gemäß Anspruch 2, wobei der Auftrag mittels Sprühen, durch Pinsel- oder Schwammauftrag erfolgt.

5. Anwendung der Zubereitungen gemäß Anspruch 2, wobei die Anwendung aus organischen Lösemitteln im Tränk- oder Tauchverfahren oder mittels Sprühmethoden erfolgt.

6. Anwendung der Zubereitungen gemäß Anspruch 3 auf textilen Substraten, wobei die Appretur mittels Zwangsapplikation oder im Ausziehverfahren erfolgt.

7. Anwendung der Zubereitungen gemäß Anspruch 3 auf textilen Substraten, wobei die Appretur als Nachbehandlung gewaschener Textilien erfolgt.

8. Textile Substrate mit einer Appretur, welche gemäß einem der Ansprüche 3 bis 7 erhalten wurden.

## Claims

1. Fluorocarbon polymer-free preparations (Z) based on water and/or organic solvents, **characterized by** the inclusion of the following individual components:
(1) 10-90% of a hydrophobic reaction product (S) obtainable by reacting a component (A) of 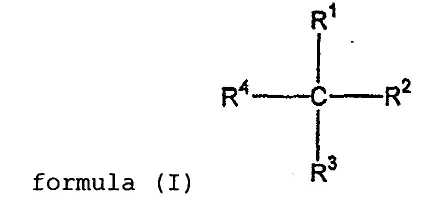 and/or of 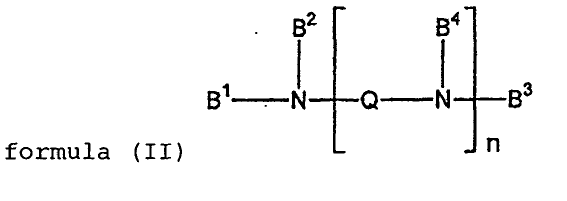 where R¹ is a hydrophobic residue of the connotation -X-Y-Z or -Z, where
X is 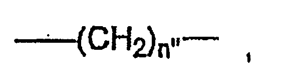 Y is 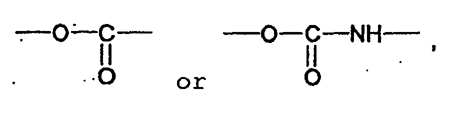 Z is
-(CH₂)ₘ-CH₃,
R² is a residue of the composition 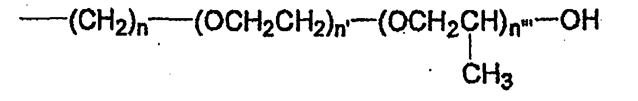 R³ is a hydrophobic residue of the connotation -X-Y-Z, -Z or -Y-Z, with the proviso that in the case of the -Y-Z connotation n" always replaces n in the R² residue,
R⁴ is a residue of the connotation -X-Y-Z or -(CH₂)_{n'}H,
B¹ is a hydrophobic residue of the connotation -V-W-Z or -Z, where
V is -(CH₂)_{n"}- or 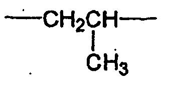 W is 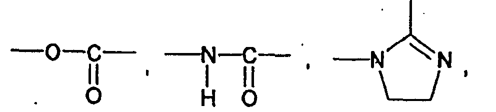 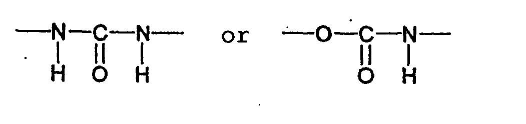 B² is 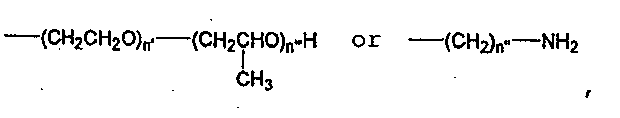 B³ is a hydrophobic residue of the connotation
-V-W-Z, -Z or 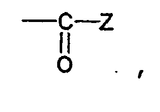 B⁴ is -V-W-Z or 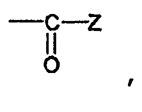 and
Q is -(CH₂)_{n"}-,
| | | |
|---|---|---|
| n, n', n", n"' and m are independently integers of | | |
| the connotation | | |
| n | = | 0-2, |
| n' | = | 0-4, |
| n" | = | 1-4, |
| n"' | = | 0-4 and |
| m | = | 12-26, |
with a partially blocked or non-blocked di-, tri-or polyisocyanate (IC), wherein the fraction of free NCO groups is between 1.8 and 10 per mole and the ratio of free NCO groups to reactive groups in the compounds of formulae (I) and/or (II) is in the range from 1:1 to 1:1.3,
(2) 10-90% of a C₈-C₂₈-alkyl groups containing organopolysiloxane constructed of structural units of formulae (IIIa, IIIb, IIIc, IV), 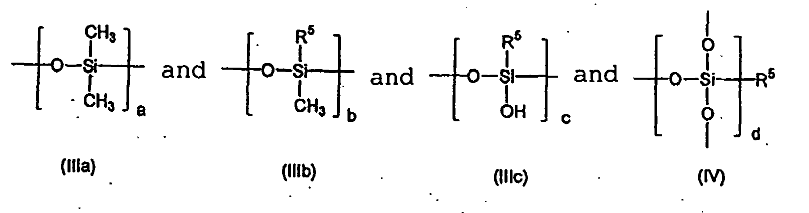 and end groups of formulae (Va, Vb, Vc) 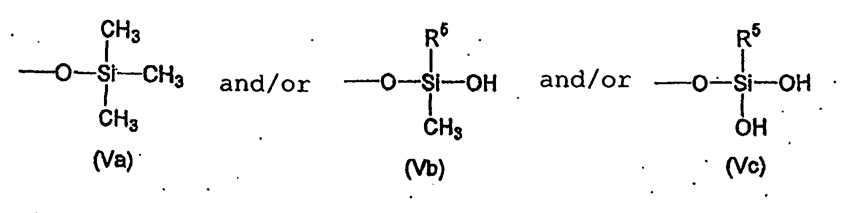 where R⁵ in formulae (IIIb), (IIIc), (IV), (Vb) and (Vc) are each independently a linear or branched C₈-C₂₈-alkyl residue or a residue of the connotation 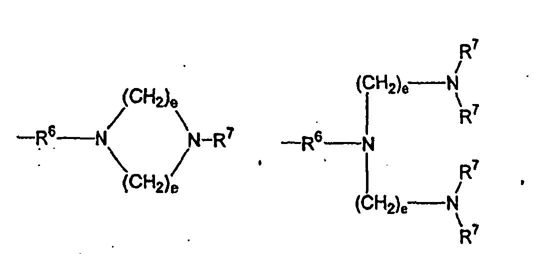 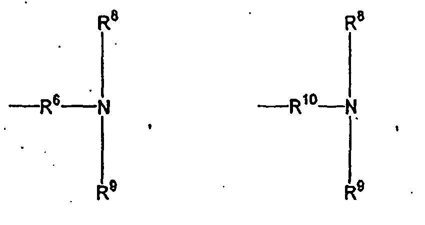
-(CH₂)_{f}-NH-(CH₂)_{g}-NH₂ -(CH₂)_{g}-NH₂, 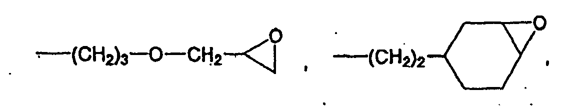
or 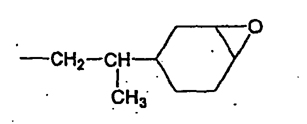 where R⁶ is a residue of the connotation 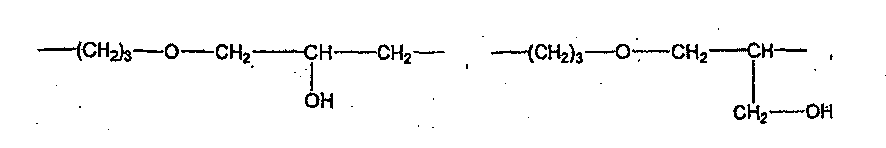 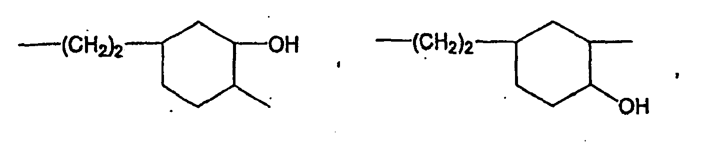 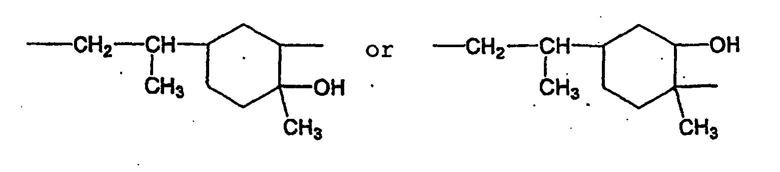 R⁷ is a linear or branched C₁-C₄-alkyl residue,
R⁸ and R⁹ are identical or different, linear or branched C₁-C₁₈-alkyl residues,
R¹⁰ is a residue of the connotation 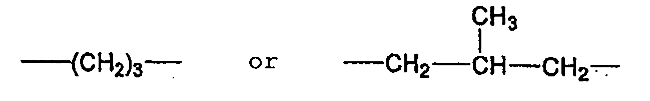
a = an integer from 0-700,
b = an integer from 0-900,
c = an integer from 0-200,
d = an integer from 0-100,
where a + b + c + d = 10-1000 and
b + c is ≥ 10,
e = the integer 2 or 3,
f = the integer 2 or 3,
g = the integer 2 or 3,
with the proviso that the total nitrogen content of the organopolysiloxane is 0.15-1.00 weight percent, the epoxy equivalent of the organopolysiloxane is 1000-25 000 g/eq and the content of C₈-C₂₈-alkyl residues in the organopolysiloxane is 25-86 weight percent,
(3) 0-45% of a blocked or non-blocked di-, tri- or polyisocyanate, and
(4) if appropriate customary emulsifiers.

2. The use of the preparations according to claim 1 as a finish on flat materials.

3. The use of the preparations according to claim 2 as a finish on textile substrates, paper, leather and mineral flat materials.

4. The use of the preparations according to claim 2 by spray application, brush application or sponge application.

5. The use of the preparations according to claim 2 from organic solvents by drenching or dipping or by means of spray methods.

6. The use of the preparations according to claim 3 on textile substrates by forced application or by the exhaust method.

7. The use of the preparations according to claim 3 on textile substrates as aftertreatment of washed textiles.

8. Textile substrates having a finish which were obtained according to any one of claims 3 to 7.

## Revendications

1. Préparations (Z) à base d'eau et/ou de solvants organiques exemptes de polymère de fluorocarbone, **caractérisées en ce qu'**elles contiennent les composants individuels suivants :
(1) 10 à 90 % d'un produit de réaction hydrophobe (S), pouvant être obtenu par la réaction d'un composant (A) de formule (I) 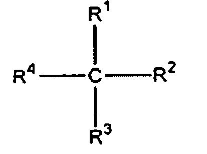 et/ou de formule (II) 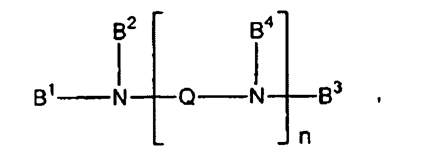 où R¹ est un radical hydrophobe -X-Y-Z ou -Z, dans lequel :
X est : -(CH₂)_{n"}-,
Y est : 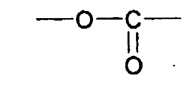 ou 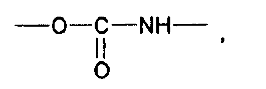 Z est : -(CH₂)ₘ-CH₃,
R² est un radical ayant la composition suivante : 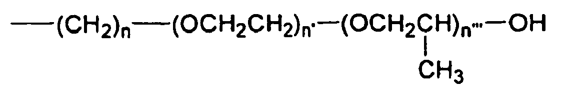 R³ est un radical hydrophobe de formule -X-Y-Z, -Z ou -Y-Z, à la condition que, quand il représente -Y-Z, alors dans le radical R², n soit toujours remplacé par n",
R⁴ est un radical de formule -X-Y-Z ou -(CH₂)ₙ·H,
B¹ est un radical hydrophobe de formule -V-W-Z ou -Z, dans lequel
V est -(CH₂)_{n"}- ou 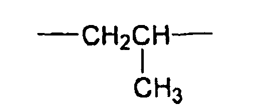 W est : 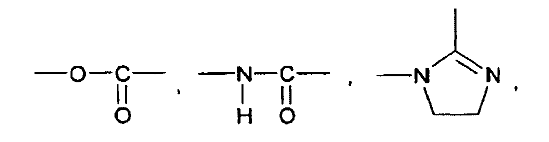 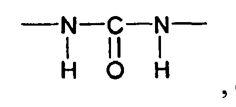 ou 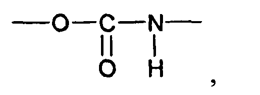 B² est 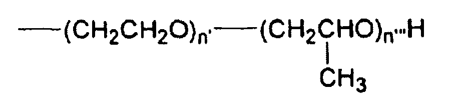 ou
-(CH₂)_{n"}-NH₂
B³ est un radical hydrophobe de formule -V-W-Z, -Z ou 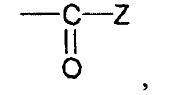 B⁴ est -V-W-Z ou 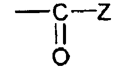 et
Q représente -(CH₂)_{n"}-,
n, n', n", n"' et m représentent indépendamment les uns des autres les nombres entiers suivants :
n = 0-2,
n' = 0-4,
n" = 1-4,
n"' = 0-4, et
m = 12-26,
avec un di-, un tri- ou un polyisocyanate (IC) non bloqué ou partiellement bloqué, la proportion des groupes NCO libres étant comprise entre 1,8 et 10 par mole, et le rapport des groupes NCO libres aux groupes réactifs des composés de formules (I) et/ou (II) étant de 1:1 à 1:1,3,
(2) 10 à 90 % d'un organopolysiloxane contenant des groupes alkyle en C₈-C₂₈, qui est constitué des motifs structurels de formules (IIIa, IIIb, IIIc, IV), 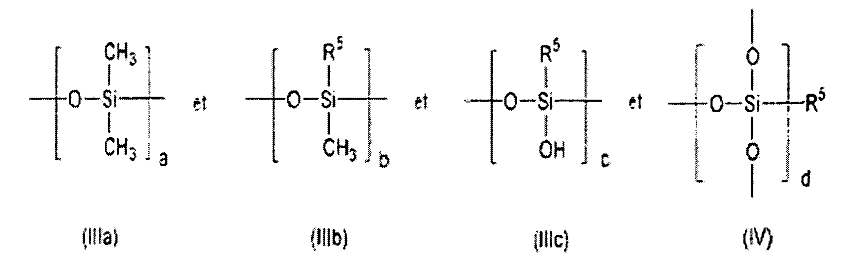 et de groupes terminaux de formules (Va, Vb, Vc) 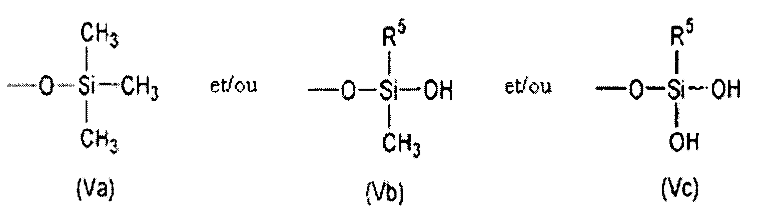 les radicaux R⁵ des formules (IIIb), (IIIc), (IV), (Vb) et (Vc) représentant chacun indépendamment des autres un radical alkyle en C₈-C₂₈ à chaîne droite ou ramifiée ou un radical de formule 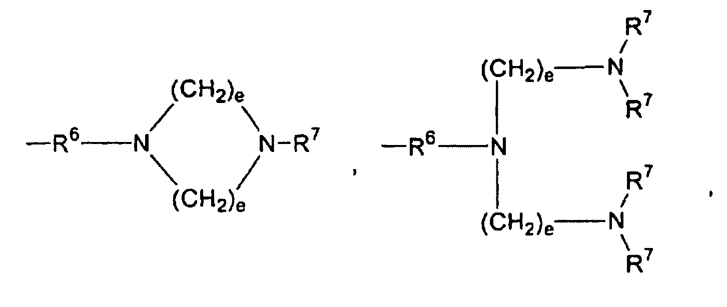 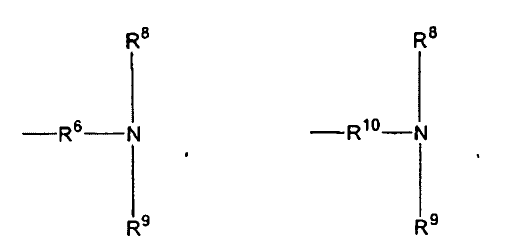
-(CH₂)_{f}-NH-(CH₂)_{g}-NH₂ -(CH₂)_{g}-NH₂ 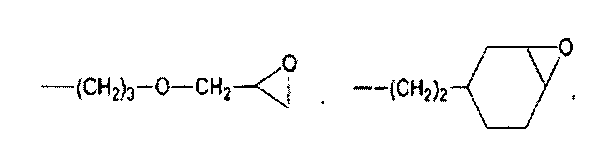
ou 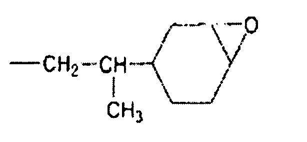 où R⁶ est un radical de formule 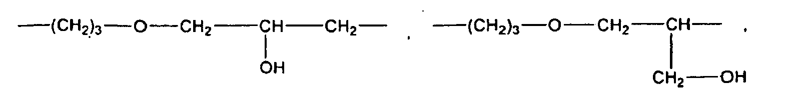 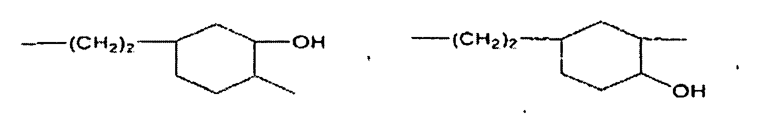 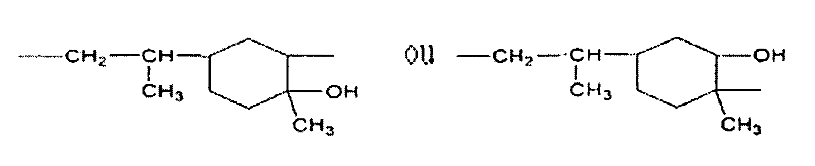 R⁷ est un radical alkyle en C₁-C₄ à chaîne droite ou ramifiée,
R⁸ et R⁹ sont des radicaux alkyle en C₁-C₁₈ à chaîne droite ou ramifiée, identiques ou différents,
R¹⁰ est un radical de formule -(CH₂)₃- ou 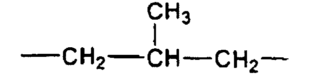
a est un nombre entier de 0 à 700,
b est un nombre entier de 0 à 900,
c est un nombre entier de 0 à 200,
d est un nombre entier de 0 à 100,
avec a + b + c + d = 10 à 1 000 et b+c ≥ 10,
e est le nombre entier 2 ou 3,
f est le nombre entier 2 ou 3,
g est le nombre entier 2 ou 3,
à la condition que la teneur totale en azote de l'organopolysiloxane soit de 0,15 à 1,00 % en poids, que l'équivalent époxyde de l'organopolysiloxane soit de 1000 à 25 000 g/éq. et que la teneur de l'organopolysiloxane en radicaux alkyle en C₈-C₂₈ soit de 25 à 86 % en poids,
(3) 0 à 45 % d'un di-, d'un tri ou d'un polyisocyanate non bloqué ou bloqué, et
(4) éventuellement des émulsifiants usuels.

2. Utilisation des préparations selon la revendication 1 en tant qu'apprêt structures bidimensionnelles.

3. Utilisation des préparations selon la revendication 2 en tant qu'apprêt sur des substrats textiles, du papier, du cuir et des structures bidimensionnelles minérales.

4. Utilisation des préparations selon la revendication 2, l'application s'effectuant par pulvérisation, par application au pinceau ou à l'éponge.

5. Utilisation des préparations selon la revendication 2, cette utilisation ayant lieu à partir de solvants organiques par un procédé par imprégnation ou au trempé, ou par des méthodes de pulvérisation.

6. Utilisation des préparations selon la revendication 3 sur des substrats textiles, l'apprêtage s'effectuant par application forcée ou par un procédé par épuisement.

7. Utilisation des préparations selon la revendication 3 sur des substrats textiles, l'apprêtage s'effectuant sous forme d'un post-traitement de textiles lavés.

8. Substrats textiles portant un apprêt qui ont été obtenus conformément à l'une des revendications 3 à 7.
